# EUROPEAN PATENT SPECIFICATION

(11) **EP 0 743 606 B1**
(45) Date of publication and mention of the grant of the patent: **12.04.2006**
(21) Application number: 96107810.2
(22) Date of filing: 15.05.1996
(51) Int. Cl.: G06F 17/30

(54) **Data unit group handling apparatus**
Gruppenverwaltungsgerät für Dateneinheiten
Appareil de gestion de groupes pour des unitées de données

(30) Priority: 17.05.1995 JP 14269795
(43) Date of publication of application: 20.11.1996
(73) Proprietor: FUJI XEROX CO., LTD., Minato-ku Tokyo 107 (JP)
(72) Inventor: Ishida, Eiji, Hodogaya-ku, Yokohama-shi, Kanagawa (JP); Matsunaga, Yoshifumi, Ashigarakami-gun, Kanagawa (JP); Suzuki, Toshikatsu, Ashigarakami-gun, Kanagawa (JP); Taniguchi, Shinichiro, Ashigarakami-gun, Kanagawa (JP); Ishima, Hiroyuki, Ashigarakami-gun, Kanagawa (JP)
(74) Representative: Hoffmann, Eckart

(56) References cited:
- EP-A- 0 622 743
- WO-A-88/04454
- US-A- 5 388 257

## Description

The invention relates to a method and an apparatus for retrieving or analyzing data stored in a plurality of data unit groups, such as databases.

A data unit represents a set of data components having a name or a head word. A character string represents the set of data, but other electronically representable data, such as an image, sound or animation, can also be represented. Further, with respect to the convenience of retrieval, the data unit may include attribute values representing the characteristics thereof, such as keywords. A data unit group represents a set that can include a plurality of the data units. In this invention, a plurality of data unit groups which coherently exist in the file system scattered about among other files, can be retrieved or analyzed.

An electronic dictionary can represent the data unit group. A data unit can include, for example: a head word, such as the word "apple"; a data body having a description, such as a pronunciation; and/or a meaning and an example of the head word. Further, an entire English-Japanese dictionary, therefore, can represent the data unit group. An example where a plurality of data unit groups exist can include a Japanese dictionary, a Japanese-English dictionary, a French dictionary and the like, other than the English-Japanese dictionary. The dictionary data is not usually edited, but the data unit group in this invention could be edited, converted or transferred.

Another example of a data unit group is a database, where a record of the database corresponds to the data unit. The entire database for a particular field can correspond to the data unit group.

Japanese Laid-Open Patent Publication No. 62-287336 (JP 363) and Japanese Laid-Open Patent Publication No. 4-195680 (JP 680) pertain to systems that simultaneously analyze and retrieve a plurality of the data unit groups. JP (336) discloses that a user can select a plurality of dictionaries to be simultaneously searched. The names of dictionaries, which exist in a specified disc apparatus and dictionary information server, are displayed. A user can freely select various dictionaries from a plurality of dictionaries whose names are displayed, and simultaneously use them. Alternatively, after a search of the first dictionary, a user can select a further search condition, based on a search result of the first dictionary, to search the second dictionary.

JP (680) also discloses utilizing a plurality of the dictionaries. The dictionaries are classified in two groups, "contents explanation" and "conversion". A table, that indicates how to use the dictionaries, is preset and predetermined and can consult the dictionary after a result by a "conversion" dictionary. Further, a user can make an application in any situation by defining a table, which includes the dictionaries and their priorities.

However, the available data unit groups or locations, when they exist, are preset and predetermined. Conventional systems have not considered that a file, which is not available in the system, may exist mixed with other files in a predetermined location in the file system, where the data unit group must in fact exist. This can easily happen where a user freely locates a file in a file system, deletes it or moves it. Accordingly, there exists a danger that an unavailable file could be supplied to users as an available one. Also, because the user must maintain a table as described above, it is not possible to successively search those data unit groups, and at a same time, dynamically add a new data unit group or delete a new data unit group.

EP-A-0 622 743 discloses a file management system, wherein automatic maintenance of folders is accomplished by associating items in a folder with a query based, user-defined attribute. Specifically, the document is concerned with "refreshing" the user-interface to provide an up-to-date display of the files contained within an open folder. For example, files that have been deleted from a folder are automatically updated in the folder's graphical interface. Contents of a folder "group" are folder-associated to ensure that any change of files in a folder is reflected in the folder view. However, because only files in a folder are maintained, files that are not associated with the folder are not maintained.

WO-A-88104454 discloses an information retrieval system and method, wherein searches are conducted by other methods such as Lexis and Dialog. The user is presented with a graphical or subcategorized view of the search results, which are contained in a fixed textbase. Indices and pointers to the various text in the textbase are provided in seven supporting data files. The indexing files point to the locations in the textbase file, regarding user-specified text.

US-A-5,388,257 discloses a method and apparatus for operating a computer based file system that permits a search of previously stored objects using file access system calls using search criteria other than file-name-substring matching.

One object of the invention is to provide a system that can automatically retrieve a data unit group, which is available for the system, where data unit groups are scattered throughout an ordinary file system.

Another object of the invention is to provide a system that may dynamically, upon an instruction from a user, determine a combination of data unit groups and search or analyze the data unit groups.

These objects are achieved by a method and an apparatus as claimed in claims 1 and 3, respectively, and their preferred embodiments which are subject-matter of the dependent claims.

Additional aspects and advantages of the invention will be set forth, in part, in the description that follows and, in part, will be obvious from the description, or may be learned by practice of the invention. The aspects and advantages of the invention may be realized and attained by means of the instrumentalities and combinations particularly pointed out in the appended claims.
Fig. 1 is a block diagram illustrating the data unit group handling apparatus of a first embodiment according to the invention;
Fig. 2 illustrates an example of a file system targeted;
Fig. 3 is an example of a structure of the data unit group;
Fig. 4 is an example of a relational information stored in the data unit group relating section;
Fig. 5 is a flowchart illustrative of a procedure to check an entire file system and to retrieve available data unit groups;
Fig. 6 is a flowchart illustrative of the procedure for step S5b;
Fig. 7 is a flowchart illustrative of the procedure to determine whether a file item is available for this system;
Fig. 8 is an example of data stored in the group name storing section;
Fig. 9 is an example of a display of names for available data unit groups;
Fig. 10 is a flowchart for the procedure to retrieve available data unit groups under designated directories;
Fig. 11 is a flowchart for the procedure to retrieve the relational information;
Fig. 12 is an example illustrating the data stored in location storing section;
Fig. 13 is a flowchart for the procedure to select data unit groups without ordering;
Fig. 14 is an example illustrating the display after the data unit groups are selected;
Fig. 15 is an example of data stored in the selection result storing section without ordering;
Fig. 16 is a flowchart for the procedure to select the data unit group with ordering;
Fig. 17 is an example of data stored in the selection result storing section with ordering;
Fig. 18 is a flowchart for the procedure to retrieve data units from selected data unit groups without ordering;
Fig. 19 is an example illustrating a list of the retrieved data units;
Fig. 20 is an example illustrating a display of the head words for the retrieved data units;

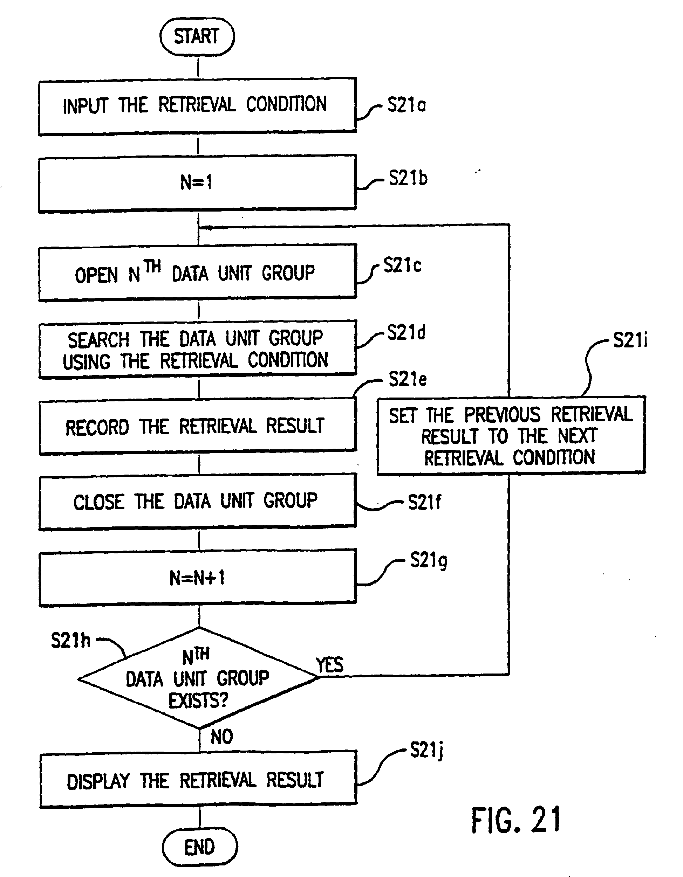

Fig. 21 is a flowchart for the procedure to retrieve data units from selected data unit groups with ordering;
Fig. 22 is a flowchart for the procedure to select the data unit and to display detailed contents of the selected data unit;
Fig. 23 is an example illustrating a display of the detailed contents of the selected data unit;
Fig. 24 is a block diagram illustrating the data unit group handling apparatus of a second embodiment;
Fig. 25 is a flowchart for the procedure to analyze data units in selected data unit groups and to display the image of the analysis chart;
Fig. 26 is an example of data stored in the analysis value calculating section 15; and
Fig. 27 is an example illustrating a display of the image of the analysis chart.

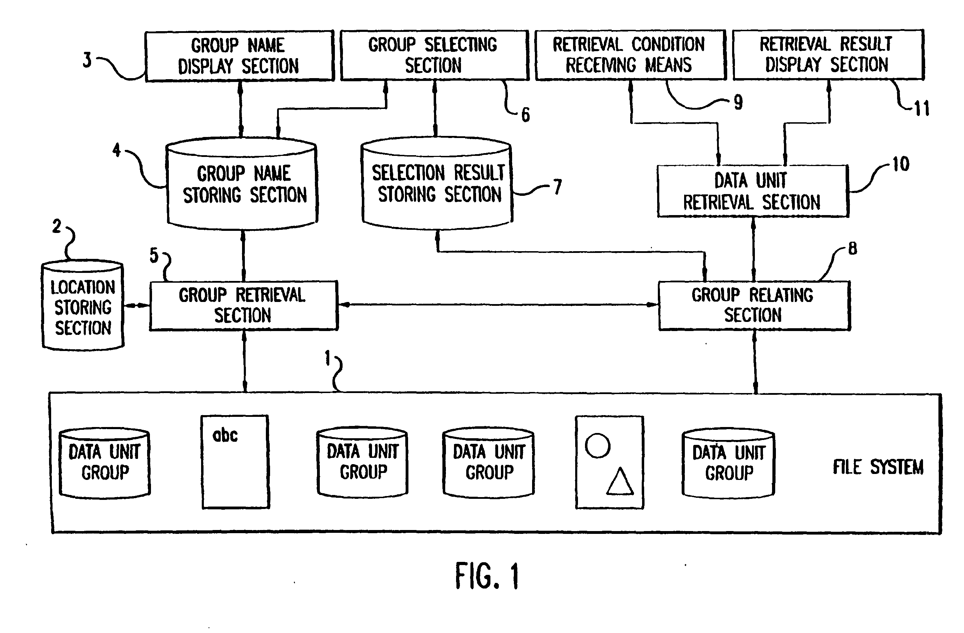

Fig. 1 illustrates a block diagram for the data unit group handling system for a first embodiment of the invention. The data unit group handling system of Fig. 1 includes a file system 1, a location storing section 2, group name display section 3, group name storing section 4, group retrieval section 5, a group selecting section 6, a selection result storing section 7, a group relating section 8, a retrieval condition receiving section 9, a data unit retrieval section 10 and the retrieval result display section 11.

The group retrieval section 5 retrieves a data unit group from the file system 1. The location storing section 2 stores a location where the retrieved data unit group exists. The location storing section 2 is accessed by the retrieval procedure by the data unit group retrieval section 5.

The group name storing section 4 stores names of the data unit groups, as a retrieval result based on a retrieval of the group retrieval section 5. The group name display section 3 displays names of the data unit groups stored in the group name storing section 4. The group selecting section 6 selects a data unit group to be searched from data unit groups, whose names are displayed by the group name display section 3.

The selection result storing section 7 stores names of the data unit groups, which have been selected by the group selecting section 6. The group relating section 8 creates a relational information, which relates data unit groups stored in the selection result storing section. 7 to each other, and stores this relational information.

The retrieval condition receiving section 9 receives a retrieval condition from a user. The data unit retrieval section 10 retrieves data units from the data unit groups that have been accessed by the group relating section 8, based on the retrieval condition from the retrieval condition input section 9. The retrieval result display section 11 displays a data unit retrieved by the data unit retrieval section 10.

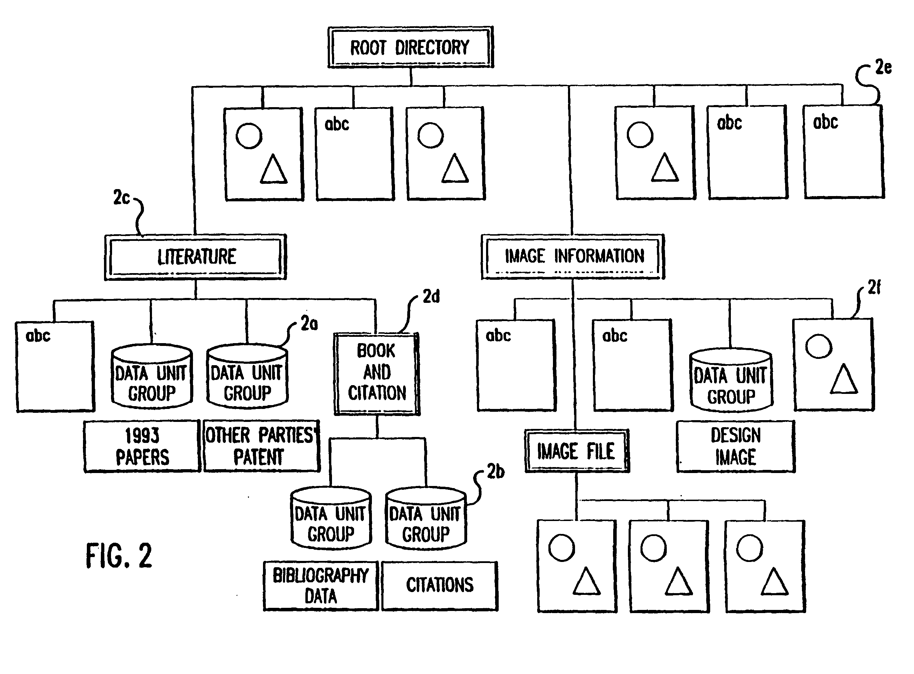

Fig. 2 illustrates an example of a file system according to the invention. As shown in Fig. 2, the file system is managed by a directory structure.

In Fig. 2, available data unit groups, can be scattered about among other unavailable files in the file system. Data or elements, which are accompanied by a string "data unit group", such as 2a or 2b, are available data unit groups. Data or elements enclosed by double square in Fig. 2, such as 2c or 2d, represent a directory. Elements in a single square in Fig. 2, such as 2e or 2f, represent files, including a document file or an image file.

Each of the above elements can be referred to as a "file item". The file items can be connected directly with this apparatus. Alternatively, the file items can be connected through networks, because a network file system can be considered as the file system itself.

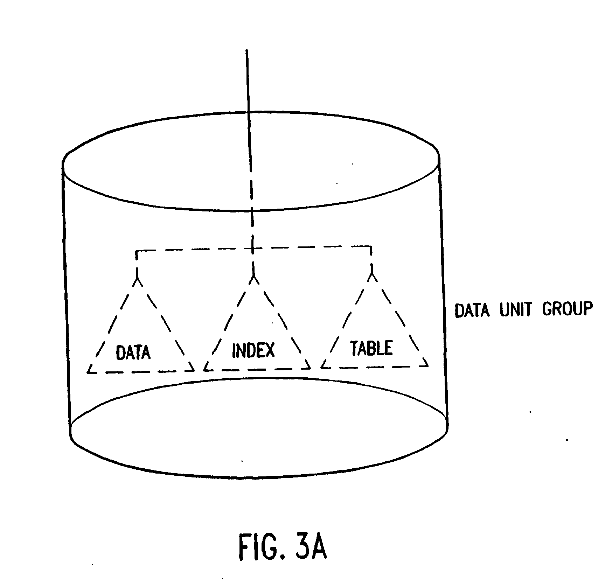

Fig. 3A illustrates a structure of the data unit group. As shown in Fig. 3A, the file item, as an available data unit group, includes three files or "subfiles". These subfiles can be referred to as "Data", "Index" and "Table". "Data" is a set of data units comprising a pair of a head words and a data body corresponding to the head words. "Index" and "Table" are subfiles that accelerate the data unit retrieval.

The subfile "Table" is prepared for converting a hash value calculated from the given retrieval key into an index address, which points to a location in the subfile "Index". The subfile "Index" is a hash table having pairs of the retrieval keys and a data address, which points to a data unit corresponding to a retrieval key in the subfile "Data". Each list is prepared for pointing each data unit to at least one hash value. The index address stored in the subfile "Table" is a head address for the list.

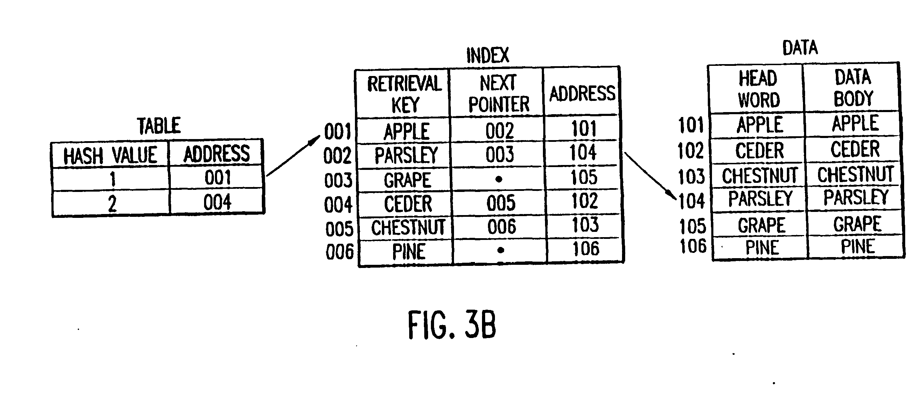

Fig. 3B illustrates an outline for the data unit group structure as described above. For example, when a string "parsley" is input as a retrieval key, and assuming that its hash value is initially set to 1 (as an index address to point to a head of list in the subfile "Index" corresponding to the hash value) is chosen by referring the subfile "Table". Next, a data address, which points to a data unit in the subfile "Data", is obtained by checking, one by one, the list in the subfile "Index" that begins with the index address. Data that is included in the data body of the data unit is retrieved as a retrieval result.

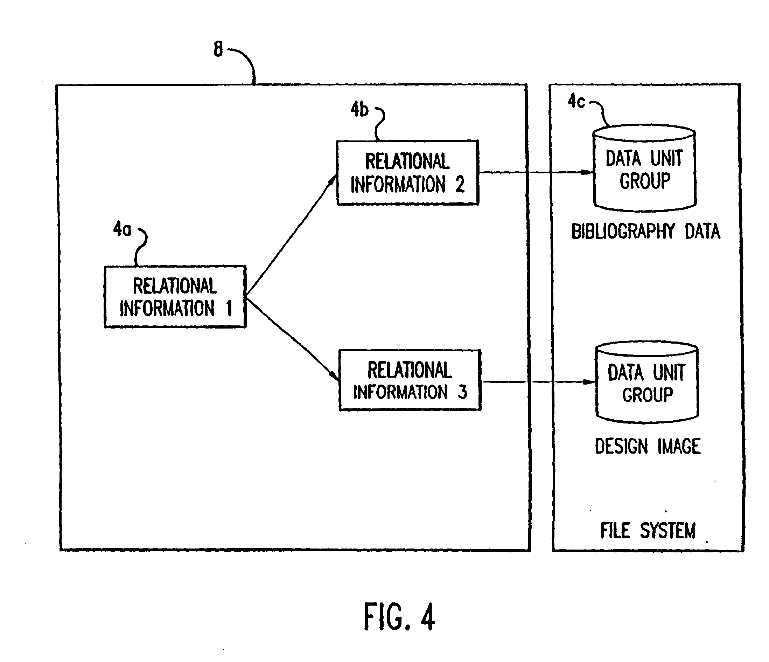

Relational information, which represents relationships among data unit groups, is stored in the group relating section 8. A relationship among data unit groups is defined by a binary tree. Fig. 4 is a conceptual illustration of a binary tree that relates data unit groups to one another. In this chart, 4a and 4b denote relational information and 4c denotes a data unit group. The relational information at the "leaf" of the binary tree corresponds to a data unit group existing in the file system. The relational information, except for the leaf, relates to "child" relational information. Thus, if two arcs of relational information relating to child relational information have an order, the order of an entire binary tree can be defined. Further, each relational information has a unique name. It is possible to store a plurality of binary trees in the group relating section 8.

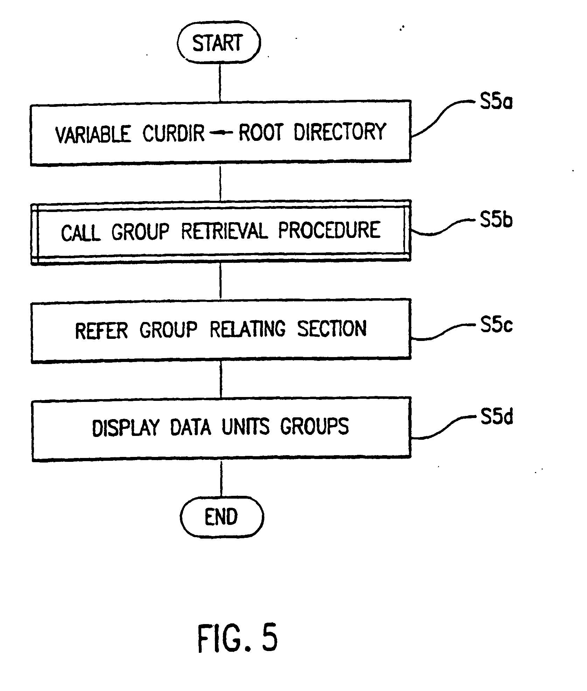

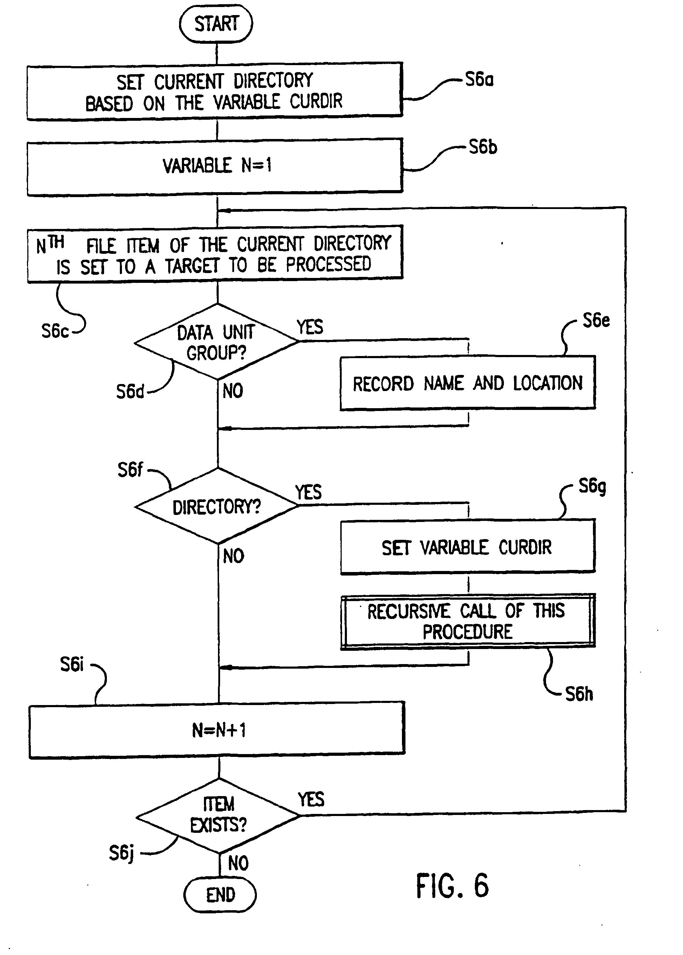

Referring to flowcharts shown in Fig. 5 and Fig. 6, the procedure to check an entire file system to retrieve available data unit groups and list them, will now be explained.

Fig. 5 illustrates the outline of the procedure. A variable "CURDIR", which stores the current directory, is set as a root directory in step S5a. The group retrieval procedure to retrieve the available data unit group, which is explained hereinafter with respect to Fig. 6, is conducted in step S5b. In step S5c, the group relating section 8 is accessed. After the group name display section 3 lists, in step S5d, names of the data unit groups retrieved, the procedure is terminated.

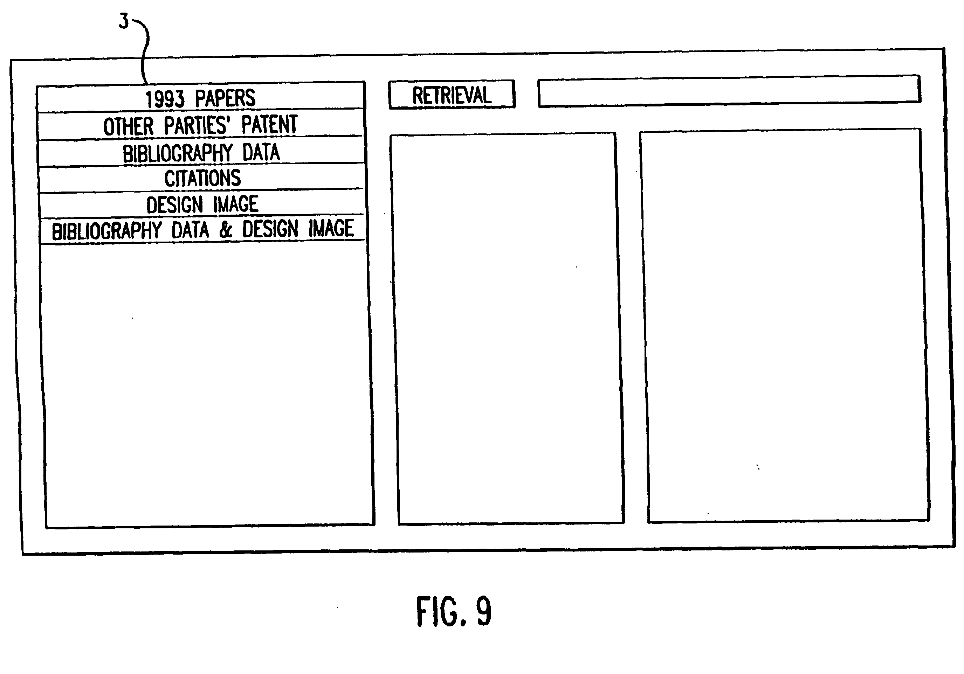

Fig. 9 is an example illustrating a display status, in which names of data unit groups are listed by the group name display section 3. The listed names from "1993 papers" through "design image" are names of data unit groups, which exist in the file system. The name "bibliography data + design image" identifies relational information that is stored in the group relating section 8.

Fig. 6 illustrates a flowchart for the group retrieval procedure in step S5b for retrieving an available data unit group. In this procedure, a current directory is selected based on the value stored in the variable CURDIR in step S6a. N or file item N, which stores a value representing file item, is set to 1 in step S6a. The file item N is a target for processing in step S6c.

In step S6d, the procedure determines whether the file item N is an available data unit group in this apparatus by a procedure described hereafter. If the file item N is an available data unit group, the name and existing position of the file item is added to the group name storing section 4 in step S6e. In other words, the name of the data unit N is obtained by reading its unique name from the file item. Its existing position is also determined from variable CURDIR. For example, in Fig. 2, the data unit groups 2a and 2b are named, in advance, "outline of the patent of other companies" and "citations", respectively.

In step S6f, the procedure determines whether a file item exists in a lower layer of file item N. If there is a file item under file item N, file item N is assigned to variable CURDIR in step S6g. Then, in step S6h the procedure illustrated in Fig. 6 is repeatedly implemented. After variable CURDIR has been incremented in step S6i, the procedure from step S6c to step S6i is repeated, as long as file item N exists, when checked in step S6j.

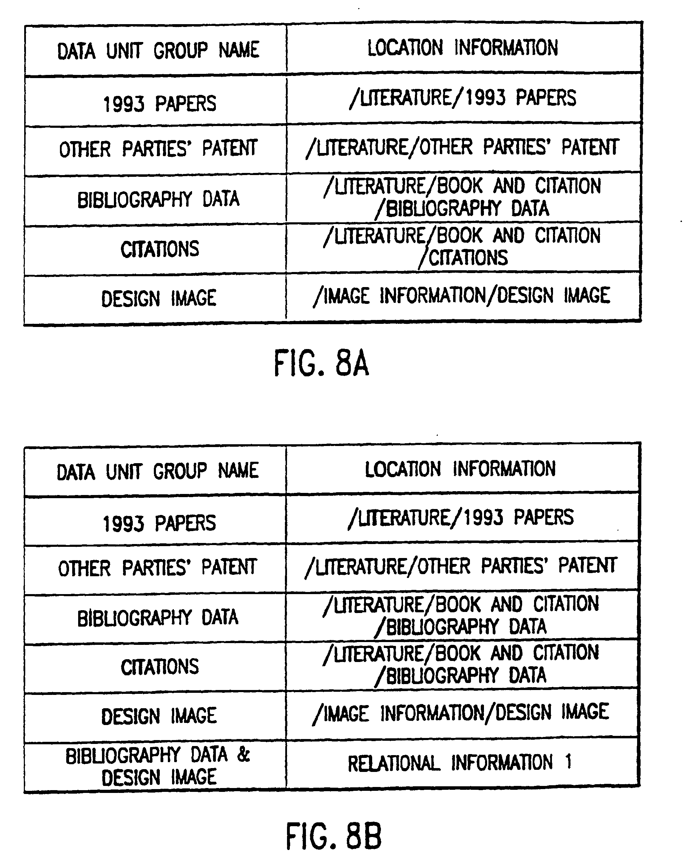

The procedure terminates when there are no more file items N, in the current directory for variable CURDIR. Then the procedure, which assigns a root directory to the variable CURDIR, terminates, and returns to the procedure of Fig. 5. At that time, the group name storing section 4 includes all available group names for the data unit group. Fig. 8A illustrates data stored in the group name storing section after the group retrieval procedure has terminated.

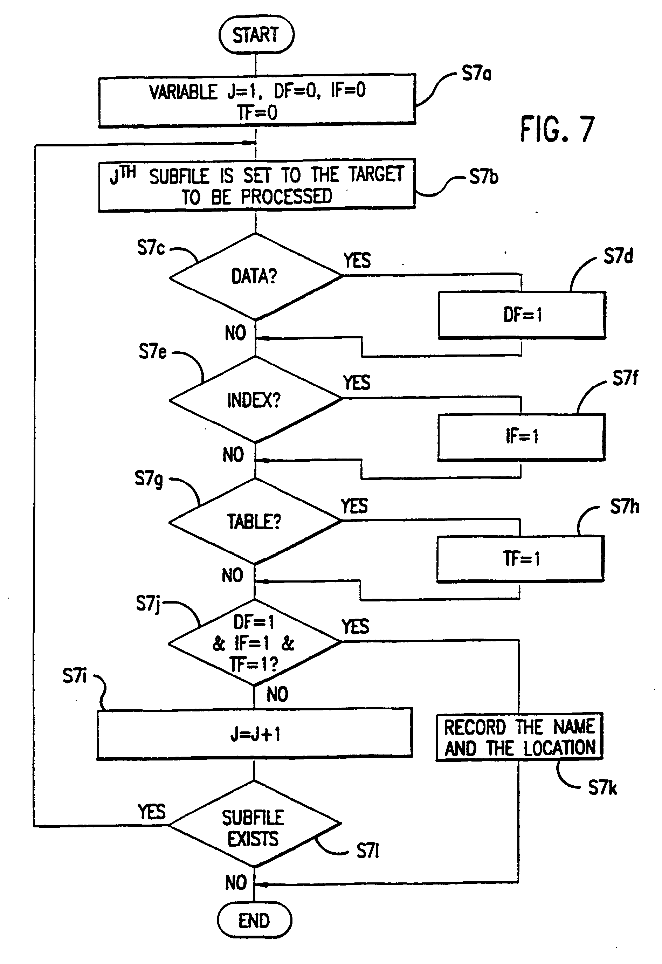

Fig. 7 illustrates a flowchart for the procedure of steps S6d-S6e in Fig. 6, to determine whether the file item is available. As shown in Figs. 3A and 3B, the structure of an available data unit group is a directory including three subfiles, "Data", "Index" and "Table". Thus, if a file item has these subfiles, a file item can be determined as the data unit group.

With respect to Fig. 7, variable J, which represents the subfile order at the lower layer of the noted file item. Subfile J is set to 1 in step S7a. Also, flags DF, IF and TF, which represent the existence of the subfiles "Data", "Index" and "Table", respectively, are initialized to 0 in step S7a.

Subfile J is determined as the target for processing in step S7b. Subfile J is checked to determine whether it is "Data" in step S7c. If it is "Data", the flag DF is set to 1 in step S7d. In a similar manner, whether the subfile is "Index" is checked in step S7e, and whether the subfile is "Table" is checked in step S7g.

If the subfile is "Index", flag IF is set to 1 in step S7f. If the subfile is "Table", flag TF is set to 1 in step S7h. The checking of these subfiles can be conducted in any order.

Next, the procedure determines in step S7j whether all flags DF, IF and TF have been set to 1. If all flags are 1, the file item is designated as an available data unit group. The name of the file item and its location are then accessed in step S7k by the group name storing section 4. The procedure is then terminated.

If at least one flag is not set to 1, variable J is incremented in step S7i. The procedure, from steps S7b-S7i, are repeated in step S7l for a subsequent subfile. If no subfiles meet the above criteria before all three flags are set to 1, a file item is not determined as an available data unit group, and the procedure terminates.

Other methods for checking the data unit group can be used. For example, one method defines a name for the available data unit group, as "XXX.DAT", and checks whether the file item name fits this form. The file system can also define a file type for each file item. A file type that indicates the application can use the file item. In such a file system, a check of the file type corresponds to the check of the data unit group. If a more exacting check is desired, the check can be conducted once the file item has been opened as the target of the search, and a determination whether a retrieval of a specified data unit from the target file item can be made. Further, it is possible to attempt retrieval of a management data unit, which is commonly included in all data unit groups. The management data unit can be retrieved by a key, which cannot be input using keyboard by a user.

If a check for basic operation of the target file item is desired, it is possible to prepare a dummy data unit, register the dummy data unit to the target file item, retrieve it, update it, and then delete it. If this operation is successful, the system determines this file item as a valid file item.

As described above, the procedure for retrieving data unit groups can be executed for an entire file system. However, this may be too time consuming, especially with a large file system. The location storing section 12 be used to limit the area for the retrieval of the data unit groups.

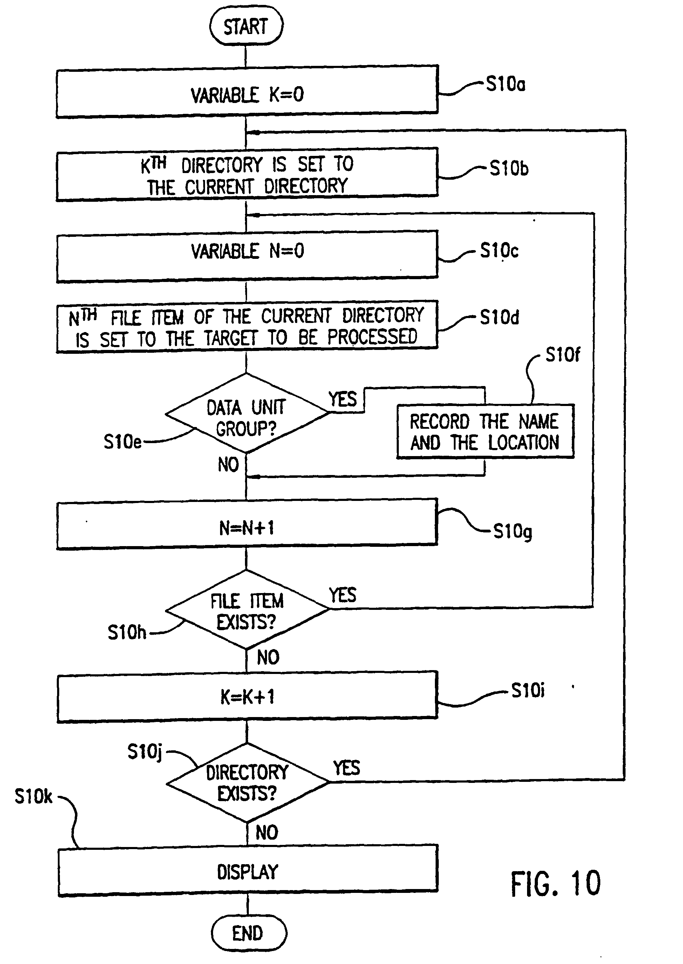

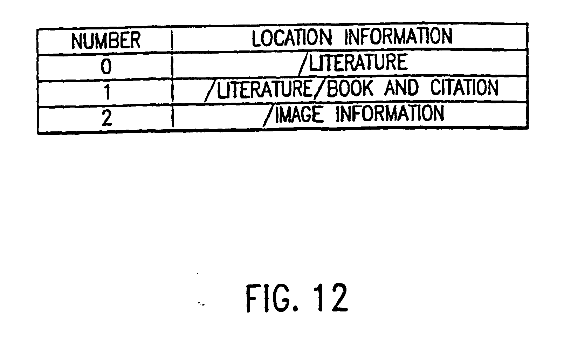

Fig. 12 illustrates an example of data stored in the location storing section 12. The location storing section 12 defines, in advance, a name of the directory that must be searched for a data unit group retrieval procedure. Fig. 10 illustrates a flowchart for the data unit group retrieval procedure, including limiting the search area in the file system.

In Fig. 10, variable K is initially set to 0 in step S10a. Next, directory for variable K that is stored in the location storing section 2 is read, and assigned to a current directory in step S10b. Next in step S10c file item N is set to O. File item N in the current directory is designated as the target for processing in step S10d. In step S10e, the procedure determines whether this file item is an available data unit group. If it is available, the name of the file item is stored to the group name storing section 4 in step S10f. N is incremented by one in step S10g. This procedure is repeated from step S10c through step S10g until there are no more file items left as determined in step S10h.

Next, variable K is incremented by one in step S10i. The procedure from step S10b through step S10i is repeated, until there are no directories remaining unchecked in the location storing section 2 as determined in step S10j. At the end of this procedure, the group name display section 3 lists the names of available data unit group(s). The procedure is terminated in step S10k.

In the procedure illustrated in Fig. 10, only one layer of the defined directory is checked. However, it is also possible to recursively check all lower layers under the defined directory. In this situation, the procedure : 4D illustrated in the flowchart of Fig. 6 is used by starting from a def ined directory, rather than a root directory. To avoid double registration of the retrieved data unit group, the name of the file item is registered after the determining whether the same name already exists in the group name storing section 4. Alternatively, one of the double registered names can be eliminated from the group name storing section 4 by a post processing step.

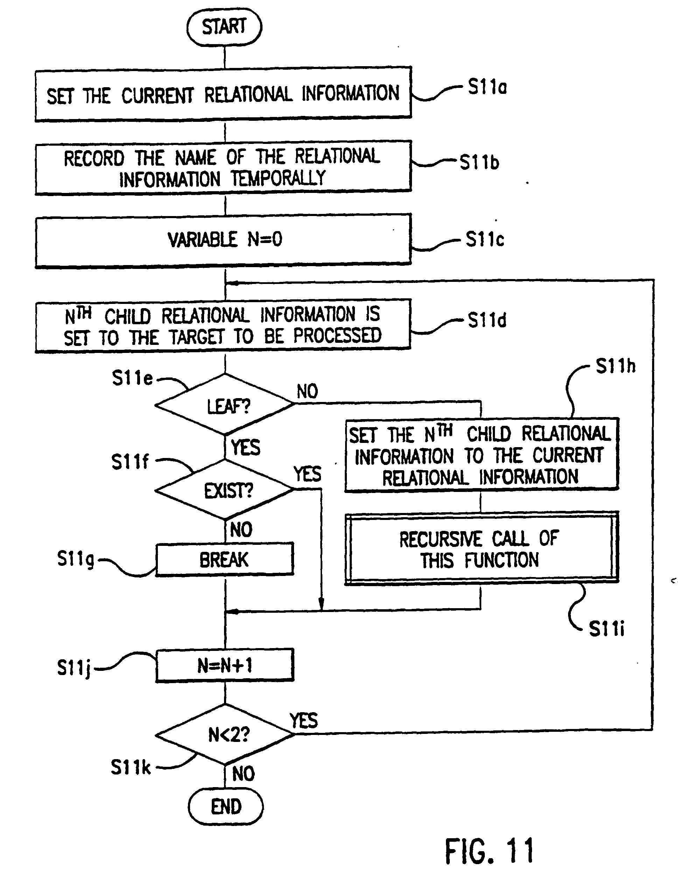

A detailed procedure, with respect to the group relating section 8 of step S5c in Fig. 5, will now be explained. At the beginning, relational information, which corresponds to a root node of a binary tree for relational information stored in the group relating section 8, is selected. The processing illustrated in Fig. 11 is then started.

In step S11a, current relational information is set with relational information corresponding to a selected root node set as current relational information. The name and address of the current relational information are temporally accessed in step S11b. In step S11c a variable N', which represents an order of child relational information for the current relational information is set to O. The child relational information N' is determined as the target for processing in step S11d. Target relational information is checked to determine whether it is a leaf of a binary tree. If so, the procedure determines whether the data unit group corresponding to leaf relational information.

The method for determining the existence of the data unit group, in step S11f, determines whether a name, which is equal to a name of the data unit group corresponding to leaf relational information, is stored in the group name storing section. If a data unit group does not exist, a temporally registered name for the relational information will be cleared. Then, a procedure, which started at the root relational information is terminated in step S11g. If, in the step S11e, the relational information is not a binary tree leaf, any relational information is assigned to the current directory in step S11h. This procedure is repeated in step S11g. After the procedure is returned, variable N' is incremented in step S11j. If the variable N' is less than 2, the procedure is repeated, starting at step S11d. Otherwise, the procedure is terminated in step S11k.

When the procedure, which started from root relational information is terminated, names and addresses of the stored relational information are transferred to the group name storing section 4. The procedure of Fig. 11 is then repeated until all root relational information is exhausted. Fig. 8B illustrates an example of a data condition for the group name storing section 4, after the procedure of Fig. 5 is complete. In Fig. 8B, for example, a pair comprising "bibliography data + design image", and the existing location "information relation 1" can be added.

The procedure, of Fig. 5, extracts all relational information corresponding to nodes of a binary tree. However, this is often very complex, because too many nodes can be extracted for the relational information. Therefore, it is also possible to extract only the relational information corresponding to a root node of a binary tree. In this case, it is not necessary to create a binary tree to relate the data unit groups to one another. Alternatively, list structure may also be used. Further, it is possible for a user to instruct whether step S5c is to be executed. Since the procedure of steps S11f and S11g detects a data unit group that has been once related and already deleted and not displayed, an invalid data unit group can not be determined as a processing target. Further, when relational information, including the eliminated data unit group, is detected, it can be automatically deleted.

The procedure for selecting a data unit group or relational information for processing from the data unit group or relational information displayed list, in Fig. 9 will now be explained. Here, "Item" represents the data unit group or the relational information.

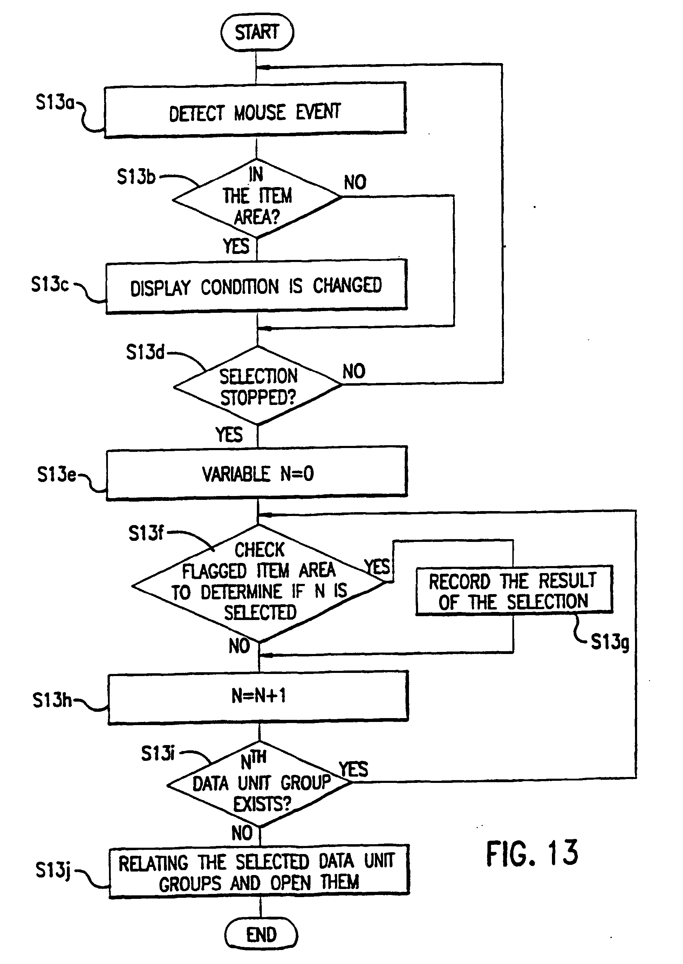

Fig. 13 illustrates a flowchart for selecting items, excluding a record of the order for the selection. In this procedure, a plurality of the items on data unit groups can be simultaneously selected. However, the selection order is not recorded, and it is impossible to combine a plurality of the data unit groups with ordering. The names of items are displayed, and simultaneously the displayed items work as buttons to receive the user's selection of items by clicking on a mouse.

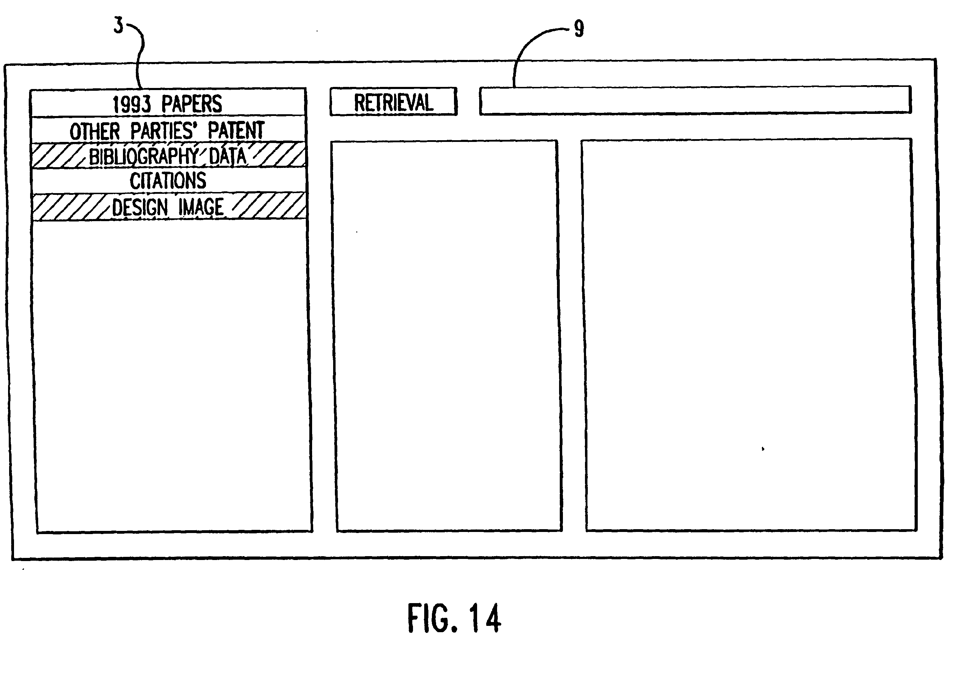

Initially, a mouse "event" or clicking by a mouse is detected in step S13a. In step S13b, a determination whether the mouse event occurs in the item area where the name of one of the items is displayed. If the event occurs in the item area, the display condition is changed to enable the user to identify the selected item. Accordingly, the selected item area is shaded in Fig. 14. A flag is assigned for each of the item areas and a flag for the shaded item area is set in step S13c. The procedure from step S13a to step S13c is repeated in step S13d until the selecting operation is stopped.

Next, the selected items are recorded. Initially, in step S13e, variable N for the item area is set to 0. Then, a flagged item area is checked in step S13f to determine whether N has been selected. If it has been selected, the name and existing location of the selected item are entered in the selection result storing section 7, as a selecting result in step S13g.

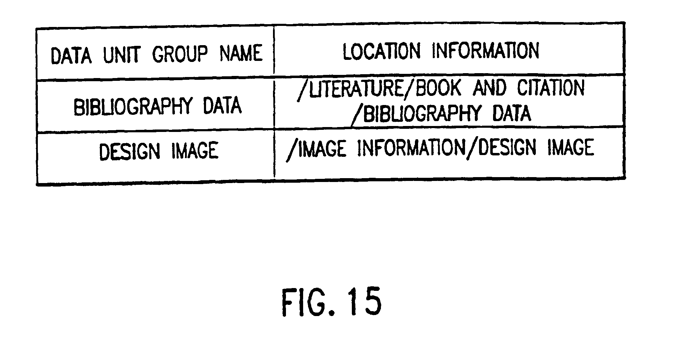

Fig. 15 illustrates a storing condition for the selection result storing section 7. While N is incremented by one, in step S13h, the procedure from step S13f-step S13h is repeated. At the end of this procedure, the group relating section 8 may relate to more than one data unit group based on the selecting result stored in the selection result storing section 7. Then, a data unit group or groups to be processed are opened, one by one in step S13j, based on the result. Here, "open" means that the data unit group is set at a status for proceeding with the process.

The group relating section 8 creates a binary tree based on data unit group or the relational information stored in the selection result storing section 7. Initially, the data unit group or relational information is chosen from the top of a list stored in the selection result storing section 7. when it is a data unit group, new relational information for referring to the data unit group, such as a pointer, is generated. Here, relational information is referred as designated relational information A. If it is relational information, the relational information is set as the designated relational information A.

Next, another data unit group or relational information is chosen from the next available selection at the top of the list in the selection result storing section 7. In a similar manner, if a data unit group exists, as the designated relational information A, another new relational information is generated to refer to the data unit group. Here, relational information is referred as designated relational information B. If it is new relational information, then the relational information is set to the designated relational information B.

When the designated relational information A and B are set, a new relational information, which refers to both of the designated relational information A and B, can be generated. The new generated relational information is set as designated relational information A. The procedure is repeated for the designated relational information B, until the list in the selection result storing section 7 is exhausted. In the data unit retrieval procedure or analyzing procedure described hereinafter, the procedure starts with relational information corresponding to a root node of a generated binary tree.

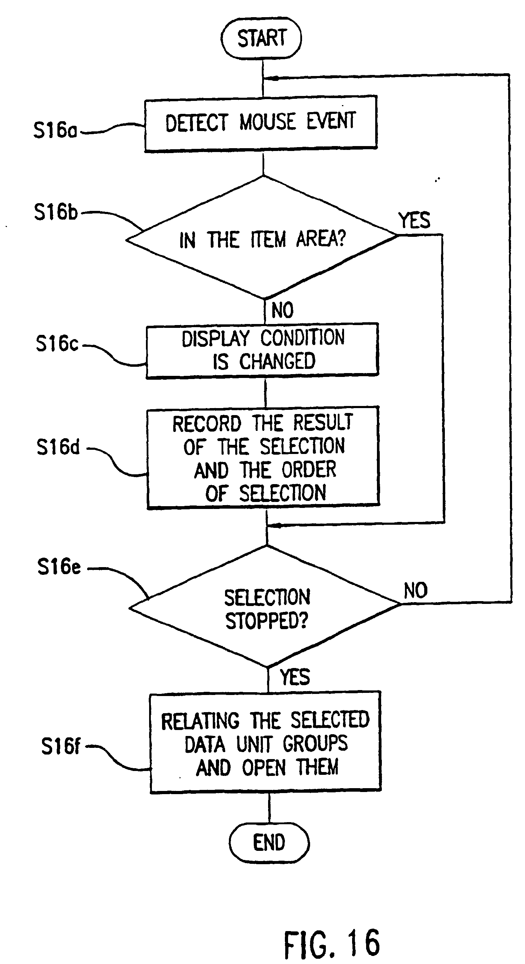

Figure 16 illustrates a flowchart for selecting items including the recorded order of selection executed by the group selecting section 6. According to this procedure, a plurality of the data unit groups can be selected, either alone, simultaneously or combined with an ordering.

Initially, a mouse event is detected in step S16a. In step S16b, it is determined whether the mouse event occurred in the item area, which displays the name of one of the items. If the mouse even occurred in the item area, the display condition is changed so a user can identify the selected item. The selected item area is shaded in step S16c as shown in Fig. 14. At the same time, the order of the selection, name and storing location of the selected item are recorded in the selection result storing section 7 as a selecting result in step S16d.

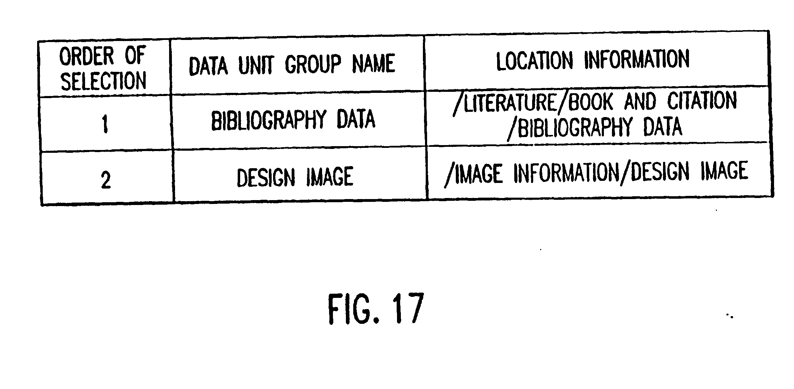

Fig. 17 illustrates the storing condition of the selection result storing section 17. The procedure from step S16a-S16d is repeated in step S16e, until the selecting operation is terminated. At the end of the procedure, the group relating section 8 relates to at least one data unit group based on the selecting result stored in the selection result storing section 7. The data unit groups are opened, one by one, for processing according to the order of the selection in step 16f.

Because the order of the selection has been recorded, the data unit groups can be opened in order. For example, when a search key is inputted by a user, a first data unit group is searched to retrieve a data unit as the retrieval result. Then, a second data unit group can be searched using the retrieval result as a search key.

In a related procedure using a binary tree: previously described, the binary tree is created to maintain the order of the selection. For instance, during the binary tree creation, designated relational information A is assigned an order "1", and the designated relational information is assigned an order "2", in order to determine the order of all nodes of the binary tree.

A procedure to retrieve the data unit from the opened data unit group will now be described. A plurality of data unit groups relate to each other in a form of the binary tree. Thus, a user can interact with them using the group relating section 8, as if they were a data unit group.

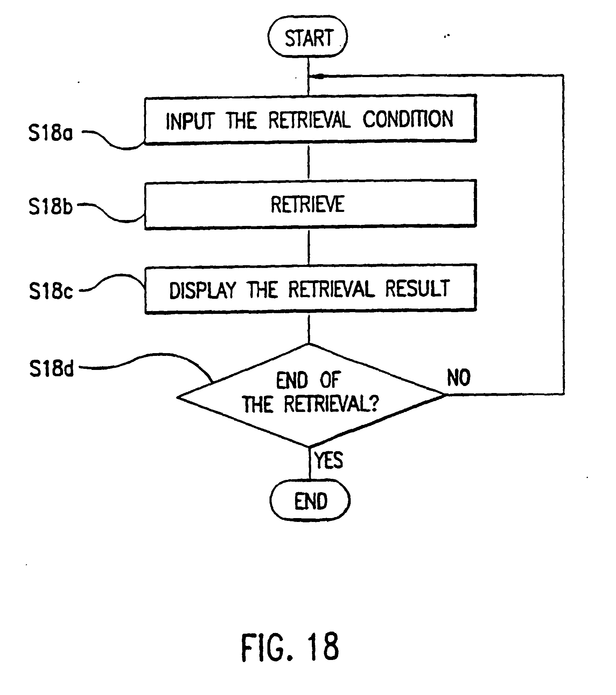

Fig. 18 is a flowchart illustrating the data unit retrieval procedure. Initially a user inputs a retrieval condition through the retrieval condition inputting section 9. Data units are retrieved by the keywords attached to each data unit. The user inputs a search key, as a retrieval condition, in step S18a. Rather than the keyword retrieval, other retrieval methods, such as a full-text retrieval, can be used without any change from the following procedure.

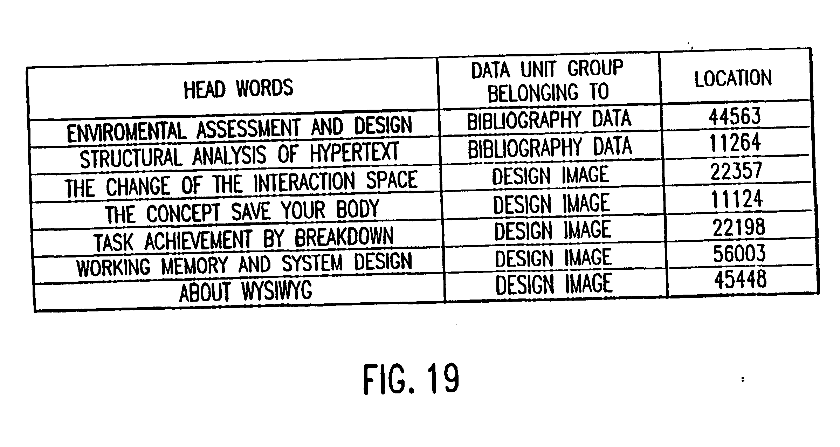

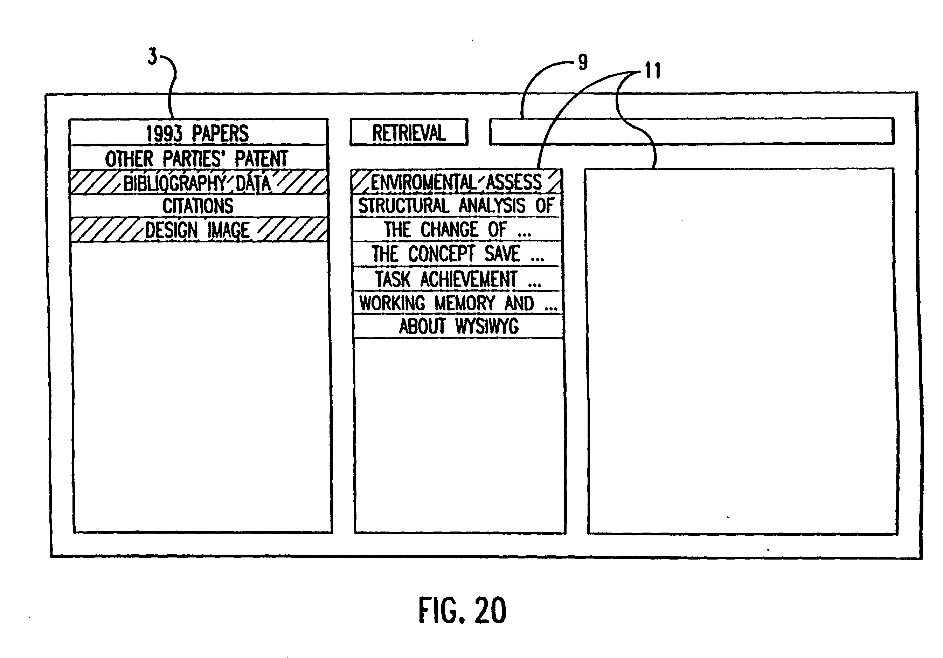

In step S18b, the retrieval section 10 retrieves data units having a keyword corresponding to the input search key to obtain a retrieval result from a plurality of related data unit groups, as shown in Fig. 19. At least the data unit name corresponding to the retrieval condition, group name of the data unit group that includes the retrieved data unit, and existing location of the data unit in the file system are included in a retrieval result. The name of the retrieved data units can then be displayed as a list in step S18a, as in Fig. 20, based on the retrieval result from the retrieval result display section 11. In step S18d, this procedure is repeated until a stop instruction is input by a user.

In the detailed procedure of step S18b illustrated in Fig. 18, a binary tree for the relational information is one by one traced from the root node. The data unit group corresponding to the traced leaf relational: information is designated as a target for the retrieval of data units. The binary tree that relates data unit groups to one another, remains after the end of the retrieval procedure, except that the tree has been created by only one node.

As described above, if relational information corresponding to the binary tree nodes, can be designated as a target for searching, a plurality of the data unit groups existing under the designated relational information can be searched or analyzed, as it were a single data unit group. Consequently, it is advantageous to have a plurality of the data unit groups, which are related without requiring an independent procedure or user interface for managing the data unit groups. Moreover, it is also possible to provide a command to store the binary tree.

When the relational information, which relates the data unit groups to one another, is not used, the group relating section 8 is not required to create a binary tree. Accordingly, it is possible that the group relating section 8 can access the result of the selection result storing section 7, open and search a data unit group.

An example, for continuous search of the data unit groups using the selection order will now be explained. Fig. 12 is a flowchart for the data unit retrieval procedure, including an order of the data unit groups, where a binary tree has not been created. Initially, the retrieval condition is input in step S21a. Next, variable N", which represents the order of the selection is set to 1, in step S21b. The data unit group is opened in step S21c, and retrieved, in step S21d, as a retrieval result. The retrieval result is then stored in step S21e.

The data unit group is closed in step S21f. Then variable N" is incremented in step S21g. If, in step S21h, a next data unit group exists, the retrieval result is set as the retrieval condition for the next retrieval. In step S21i, the procedure can then be repeated from step S21c. However, if a next subsequent data unit group does: not exist, a retrieval result is displayed. The procedure then terminates in step S21j.

When data unit groups are related to each other, rather than incrementing variable N", the binary tree for the relational information can be traced from a root node. The data unit group corresponding to the relational information can then be searched. If two arcs for the relational information are ordered, a selecting order is determined by first searching a child node having a priority. It is thus possible to freely select a plurality of document groups, which can be scattered in the file system. It is also possible to retrieve a data unit from the selected data unit groups.

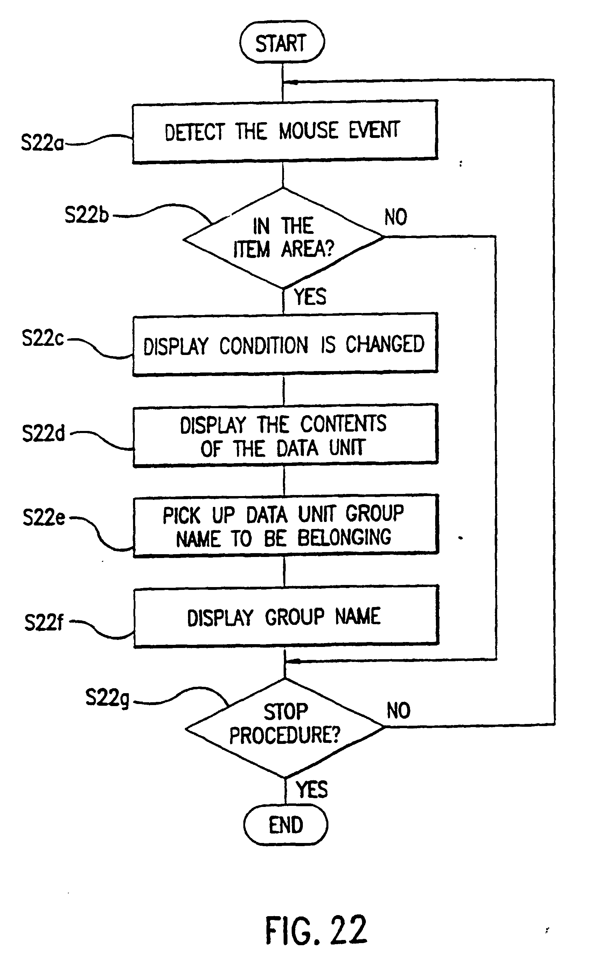

The procedure to display detailed contents of a retrieved data unit and data unit group, which includes the displayed data unit, will now be explained. Fig. 22 illustrates a flowchart for this procedure. Initially, a mouse event is detected in step S22a. In step S22b, the procedure determines whether the mouse event occurs in the area where a display lists the name of the retrieved data units. If the mouse event does occur in a list, a list selection procedure is executed.

For example, the area for the selected data unit can be shaded in step S22c. Then, the contents of the selected data unit can be displayed in step S22d, based on the group name and existing location stored in the selection result storing section 7. In step S22e, a name of the data unit group, which includes selected data unit, is chosen from a retrieval result stored in the selection result storing section and displayed in step S22f.

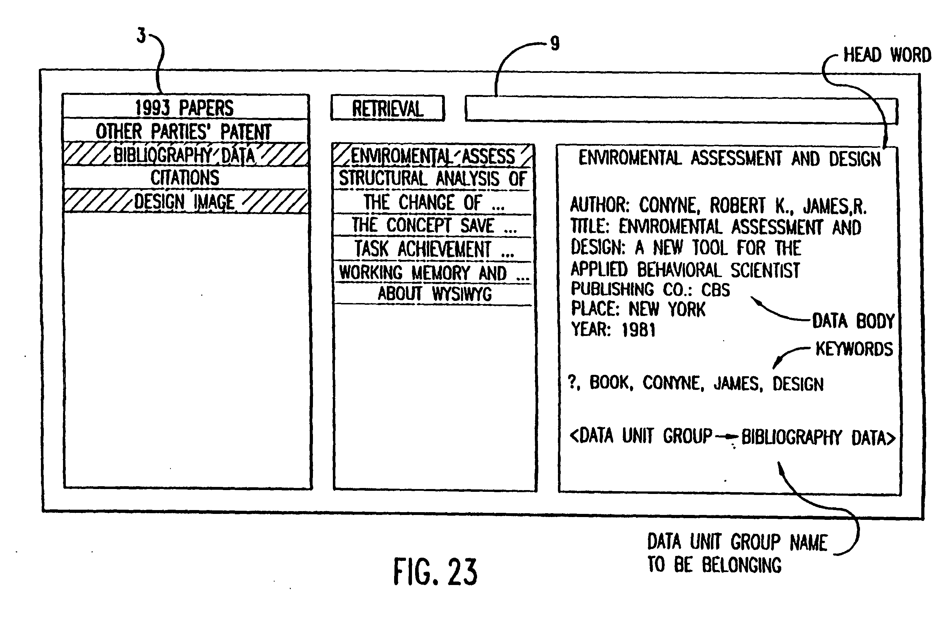

Fig. 23 is an example of a display from the detailed contents of the data unit and group name. The procedure from step S22a-step S22f is repeated, until a user inputs a stop instruction in step S22g. Thus, a user can determine the detailed contents of a selected data unit and data unit group.

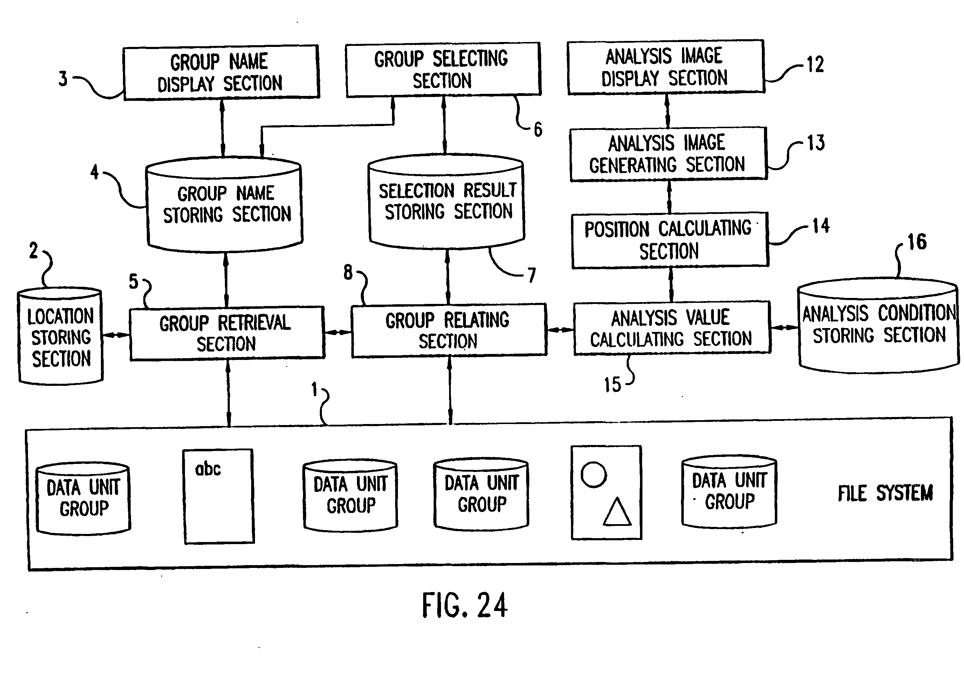

Fig. 24 illustrates a block diagram for a data handling system according to a second embodiment of the invention. This system is used to simultaneously analyze data units stored, in a plurality of data unit groups. In the second embodiment, like elements are represented by like reference characters.

Fig. 24 includes a file system 1, a location storing section 2, group name display section 3, group name storing section 4, group retrieval section 5, a group selecting section 6, a selection result storing section 7 and a group relating section 8, which as explained are same in the first embodiment. The system further includes an analysis image display section 12, an analysis image generating section 13, a position calculating section 14, an analysis value calculating section 15 and an analysis condition storing section 16.

The analysis condition storing section 16 stores a plurality of analysis conditions for calculating an analysis value for each data unit included in the data unit groups. The data unit groups are related to one another by the group relating section 8.

The analysis value calculating section 15 calculates an analysis value for each data unit, based on the analysis condition stored in the analysis condition storing section 16.

The position calculating section 14 calculates a placement position of an image element representing a data unit, based on the analysis value calculated by the analysis condition calculating section 15. The analysis image generating section 13 places an image element at a position calculated by the position calculating section 14 to generate an analysis image. The analysis image display section 12 displays the analysis image generated by the analysis image generating section 13.

The image elements, each of which corresponds to at least one data unit stored in one of the selected data unit groups, are placed on a screen, based on the contents of the data unit. This enables simultaneous analysis of the selected data unit groups. A plurality of search keys or analysis items can be placed in a horizontal direction. An image element for the data unit is randomly placed in a vertical direction on an analysis item, if the data unit includes a keyword corresponding to an analysis item.

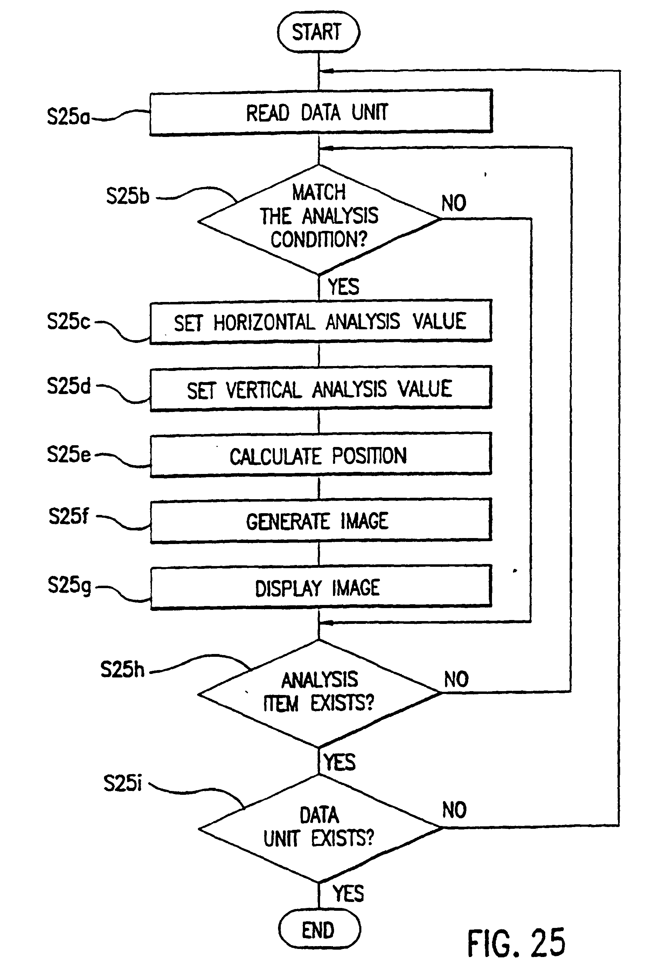

Fig. 25 is a flowchart illustrating the analyzing procedure. Since the procedure prior to the relating data unit groups to one another is same as described above, an explanation is omitted. The procedure, from after the relating of selected data unit groups, will now be explained.

Initially, the data units can be stored in selected data unit groups and can be retrieved one by one. The selected data unit groups are related one another by a binary tree. In step S25a, the binary tree is traced to search one of the data unit groups, as described in the first embodiment. Then, analysis items stored in the analysis condition storing section 16 are retrieved one by one. In step S25a, the analysis value calculating section 15 compares data units retrieved with retrieved analysis items.

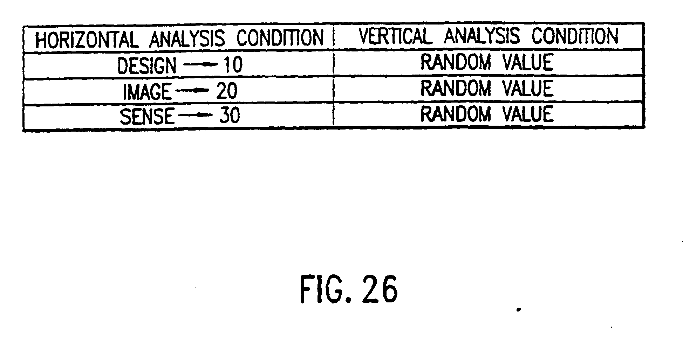

Fig. 26 illustrates an example of the analysis conditions that the stored in the analysis condition storing section 16. In this case, "design", "image" and "sense" are analysis items arranged in the horizontal direction. The numbers "10", "20" and "30", following each of the analysis items, represent analysis values (described hereinafter).

An analysis condition for the vertical direction need not be specified in step S25b. If a data unit matches an analysis condition, the data unit will include a keyword corresponding to the analysis item. The analysis value of the matched analysis item is then set to a horizontal analysis value for the data unit, in step S25c. Further, a vertical analysis value for the data unit is also set, determined by a random value, in step S25d.

Next, the position calculating section 15 calculates a screen position, where the image element of the data unit is placed based on horizontal and vertical analysis values. The analysis values of the data unit are directly assigned for a position of the data unit, in step S25e.

In step S25f, the analysis image generating section 13 generates an analysis image by adding a new image element to the position determined by the position calculating section 14. The generated analysis image is displayed in step S25g on the analysis image display section 12. In step S25h, the procedure from steps S25b S25g is repeated for each data unit and all the existing analysis items in step S25h. Further, the procedure from steps S25a-S25h is repeated until all data units, which are stored in the selected data unit groups as related to one another, in step S25i.

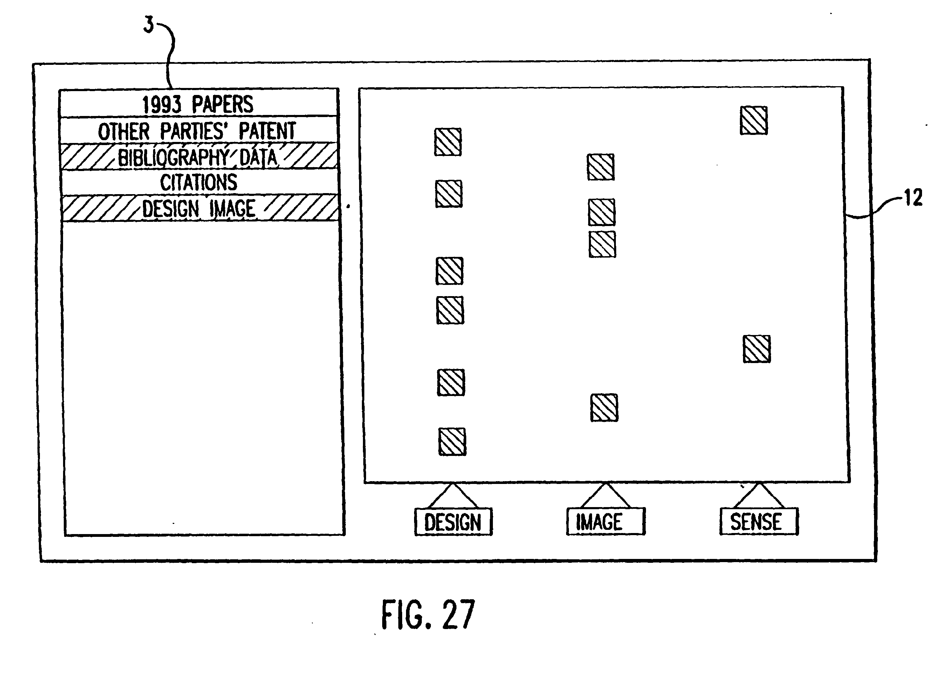

Fig. 27 illustrates an example of the analysis image generated by the procedure described above. In Fig. 27, image elements or dots representing data units, which include each analysis item as a keyword, are placed on a screen. The analysis conditions stored the analysis condition storing section can be separated. Thus, one group for an analysis condition is selected in advance for analysis and display. Further, a user can combine analysis items to make an analysis condition, or freely determine the analysis condition. In these cases, a procedure to change the display of the axis in Fig. 27 is required.

Using the procedure described above, a plurality of the data unit groups can be freely selected from data unit groups, which are scattered among the other file items in the file system. The selected data unit groups can be simultaneously analyzed.

Any data unit group can be used in this system, as long as they have a similar file format, such as illustrated in Fig. 3. For example, a dictionary and multimedia database, including sound and images, can be used as a data unit group.

As described above, a plurality of data unit groups can be freely and dynamically selected from the data unit groups, which may exist scattered with the other file items in a file system. The selected data unit groups can be simultaneously searched and easily analyzed In particular, when a plurality of data unit groups are simultaneously selected and data units are retrieved from the selected data unit groups, a user knows that a data unit group includes retrieved data unit, by graphically displaying the data unit group connected with the displayed contents. Since the location is stored in advance, to limit the retrieval scope, the available data unit groups can be effectively provided to a user.

Moreover, it is possible to dynamically select a data unit group with an order of the selection, and to retrieve the data unit from one of the selected data unit groups. It is also possible to retrieve the data unit from another data unit group, using a retrieved result from a previous order as a search condition, based on the selection order. Further, by relating data unit groups to one another and keeping a relationship therebetween, a combination of data unit groups can be easily created.

The scope of the invention is defined by the following claims.

## Claims

1. A data unit group handling method for managing a file system (1) which stores a plurality of files defined by different kinds of file format, wherein at least one of the files is a data unit group which is defined by a predetermined file format and includes data units wherein the data unit group can be located in any location in the file system (1), comprising the steps of;
retrieving at least one data unit group, which includes a data file, an index file and a hash table file, the data file storing a pair of a head word and a data body, from said file system in accordance with the file format;
retrieving a selection instruction from a user to select at least one data unit group from the retrieved at least one data unit group;
receiving retrieval condition to retrieve at least one data unit having a pair of a head word and data body; and
retrieving at least one data unit corresponding to the received retrieval condition from the at least one data unit group which is selected in accordance with the received selection instruction.

2. The method as defined in claim 1, further comprising the steps of;
storing an analysis condition to analyze the data unit in advance;
calculating an analysis value of the data unit included in said at least one data unit group which is selected in accordance with the received selection instruction, in accordance with the stored analysis condition;
calculating a position where an image element which graphically represents existence of the data unit is arranged; and
generating an analysis image which includes the image element of the data unit at the calculated position.

3. A data unit group handling apparatus comprising:
a file system (1) storing a plurality of files defined by different kinds of file format, wherein at least one of the files is a data unit group which is defined by a predetermined file format, includes a data file, an index file, and a hash table file, the data file storing a pair of a head word and a data body, and can be located in any location in the file system (1);
group retrieving means (5) for retrieving at least one data unit group from said file system (1) in accordance with the file format;
group selecting means (6) for receiving a selection instruction from a user to select at least one data unit group from the at least one data unit group retrieved by said group retrieving means (5);
retrieval condition receiving means (9) for receiving retrieval condition to retrieve at least one data unit; and
data unit retrieving means (10) for retrieving at least one data unit matching to the retrieval condition received by said retrieval condition receiving means (9) from the at least one data unit group which is selected in accordance with the selection instruction received by the group selecting means (6).

4. The apparatus as defined in claim 3 further comprising,
retrieval result display means (11) displaying the data unit retrieved by the data unit retrieving means (10).

5. The apparatus as defined in claim 3, further comprising,
identifier storing means storing an identifier for each of the data unit groups retrieved by said group retrieval means; and
identifier display means for displaying the identifier stored in said identifier storing means; wherein
said group selecting means (5) provides a button to receive the selection instruction connected with the identifier displayed by said identifier display means and is adapted to detect said button receiving the selection instruction to select at least one of the data unit groups.

6. The apparatus as defined in claim 5, wherein
said data unit retrieving means (10) is adapted to retrieve the identifier of the data unit group which includes the retrieved data unit, and further comprises,
retrieval result display means (11) for displaying the retrieved identifier of the data unit group graphically connected with the retrieved data unit.

7. The apparatus as defined in claim 3, further comprising,
location storing means (2) storing the location of the data unit group in the file system (1) to limit the scope of the retrieval of the group retrieval means (5); wherein
said group retrieval means (5) is adapted to retrieve the data unit group from the location in the file system (1) stored in said location storing means (2).

8. The apparatus as defined in claim 3, further comprising:
analysis condition storing means (16) storing an analysis condition to analyze the data unit;
analysis value calculating means (15) for calculating an analysis value of the data unit included in said at least one data unit group selected by said group selecting means in accordance with the analysis condition stored in said analysis condition storing means; and
position calculating means (14) for calculating a position where an image element which graphically represents existence of the data unit is arranged;
analysis image generating means (13) for generating an analysis image which includes the image element of the data unit at the position calculated by said position calculating means.

9. The apparatus as defined in claim 8 further comprising,
analysis image displaying means (12) for displaying the analysis image generated by said analysis image generating means (13).

10. The apparatus as defined in claim 8 further comprising,
identifier storing means storing an identifier for each of the data unit groups retrieved by said group retrieval means; and
identifier display means for displaying the identifier stored in said identifier storing means; wherein
said group selecting means (6) provides a button to receive the selection instruction connected with the identifier displayed by said identifier display means and is adapted to detect said button receiving the selection instruction to select at least one of the data unit groups.

11. The apparatus as defined in claim 8, further comprising,
location storing means (2) storing the location of the data unit group in the file system (1) to limit the scope of the retrieval of the group retrieval means (5); wherein
said group retrieval means (5) is adapted to retrieve the data unit group from the location in the file system (1) stored in said location storing means (2).

12. The apparatus as defined in claim 3, further comprising:
identifier storing means storing the identifier of the data unit group retrieved by said group retrieving means (15); and
identifier display means for displaying the identifier stored in said identifier storing means.

13. The apparatus as defined claim 12, wherein
said group retrieving means (5) is adapted to retrieve a file defined by a predetermined directory structure which includes a data file which stores a data unit having a pair of a head word and a data body, an index file which stores corresponding relation between a search key inputted to retrieve at least one of the data units and an address of the data unit in the data file corresponding to the search key, and a hash table file to convert the search key into an address of the corresponding relation in the index file corresponding to the search key.

14. The apparatus as defined in claim 3, further comprising:
a plurality of data unit groups each of which has an identifier and includes at least one data unit;
identifier display means for displaying the identifiers of the data unit groups, wherein;
the group selecting means (6) is adapted to receive a selection instruction from a user to select at least two of the data unit groups in order from the data unit groups whose identifier is displayed by said identifier display means;
a selected group storing means (7) stores the identifier of each data unit group selected by said group selecting means (6) with the order of selection;
the data unit retrieving means (10) is adapted to retrieve the data unit corresponding to the retrieval condition received by said retrieval condition receiving means (9) from one of said data unit groups in a first order and for retrieving the data unit corresponding to the data unit retrieved from the data unit group in the first order from the data unit group in a second order in accordance with the identifier of the data unit and its order stored in said selected group storing means (7); and
a retrieval result display means (11) is adapted to display the data unit retrieved from said data unit group in the second order.

15. The apparatus as defined by claim 3 further comprising,
relation storing means storing the relational information which relates a plurality of the data unit groups to one another;
relation selecting means for receiving a relation selection instruction from a user to select the relational information stored in said relation storing means; and
relation creating means for creating new relational information which relates both the data unit group selected by said group selecting means (6) and the relational information selected by said relation selecting means; wherein
said retrieving means is adapted to retrieve a data unit from the data unit groups related to one another in accordance with the newly created relational information by said relation creating means.

16. The apparatus as defined by claim 8 further comprising:
relation storing means storing the relational information which relates a plurality of the data unit groups to one another;
relation selecting means for receiving a relation selection instruction from a user to select the relational information stored in said relation storing means; and
relation creating means for creating new relational information which relates both the data unit group selected by said group selecting means (6) and the relational information selected by said relation selecting means; wherein
said analysis value calculating means (15) is adapted to calculate the analysis value of the data unit included in the data unit groups related to one another in accordance with the newly created relational information by said relation creating means.

## Patentansprüche

1. Dateneinheitengruppen-Handhabungsverfahren zum Verwalten eines Dateisystems (1), welches eine Mehrzahl von durch unterschiedliche Arten von Dateiformaten definierten Dateien speichert, wobei wenigstens eine der Dateien eine Dateneinheitengruppe ist, die durch ein vorgegebenes Dateiformat definiert ist und Dateneinheiten enthält, wobei sich die Dateneinheitengruppe an einem beliebigen Ort im Dateisystem (1) befinden kann, mit den Schritten:
Abrufen von wenigstens einer Dateneinheitengruppe, die eine Datendatei, eine Indexdatei und eine Hash-Tabellendatei enthält, wobei die Datendatei ein Paar aus Schlagwort und Datenkörper speichert, aus dem Dateisystem entsprechend dem Dateiformat;
Abrufen einer Auswahlanweisung eines Benutzers, um wenigstens eine Dateneinheitengruppe aus der abgerufenen wenigstens einen Dateneinheitengruppe auszuwählen;
Empfangen einer Abrufbedingung, um wenigstens eine Dateneinheit mit einem Paar aus Schlagwort und Datenkörper abzurufen; und
Abrufen wenigstens einer der empfangenen Abrufbedingung entsprechenden Dateneinheit aus der Dateneinheitengruppe, die entsprechend der empfangenen Auswahlanweisung ausgewählt wird.

2. Verfahren nach Anspruch 1, ferner mit den Schritten:
vorab Speichern einer Analysebedingung zum Analysieren der Dateneinheit;
Berechnen eines Analysewerts der in der gemäß der empfangenen Auswahlanweisung ausgewählten wenigstens einen Dateneinheitengruppe enthaltenen Dateneinheit entsprechend der gespeicherten Analysebedingung;
Berechnen einer Position, wo ein Bildelement, das die Existenz der Dateneinheit grafisch darstellt, angeordnet ist;
Erzeugen eines Analysebildes, welches das Bildelement der Dateneinheit an der berechneten Position enthält.

3. Dateneinheitengruppen-Handhabungsvorrichtung mit:
einem Dateisystem (1), das eine Mehrzahl von durch unterschiedliche Arten von Dateiformaten definierten Dateien speichert, wobei wenigstens eine der Dateien eine Dateneinheitengruppe ist, die durch ein vorgegebenes Dateiformat definiert ist, eine Datendatei, eine Indexdatei und eine Hash-Tabellendatei enthält, wobei die Datendatei ein Paar aus Schlagwort und Datenkörper speichert, und sich an einem beliebigen Ort in dem Dateisystem (1) befinden kann;
einem Gruppenabrufmittel (5) zum Abrufen wenigstens einer Dateneinheitengruppe aus dem Dateisystem (1) entsprechend dem Dateiformat;
einem Gruppenauswahlmittel (6) zum Empfangen einer Auswahlanweisung von einem Benutzer, um wenigstens eine Dateneinheitengruppe aus der von dem Gruppenabrufmittel (5) abgerufenen wenigstens einen Dateneinheitengruppe auszuwählen;
einem Abrufbedingungsempfangsmittel (9) zum Empfangen einer Abrufbedingung zum Abrufen wenigstens einer Dateneinheit; und
einem Dateneinheitenabrufmittel (10) zum Abrufen wenigstens einer Dateneinheit, die zu der von dem Abrufbedingungsempfangsmittel (9) empfangenen Abrufbedingung passt, aus der wenigstens einen Dateneinheitengruppe, die entsprechend der durch das Gruppenauswahlmittel (6) empfangenen Auswahlanweisung ausgewählt ist.

4. Vorrichtung nach Anspruch 3, ferner mit:
einem Abrufergebnisanzeigemittel (11), das die von dem Dateneinheitenabrufmittel (10) abgerufene Dateneinheit anzeigt.

5. Vorrichtung nach Anspruch 3, ferner mit:
einem Identifikatorspeichermittel, das einen Identifikator für jede der von dem Gruppenabrufmittel abgerufenen Dateneinheitengruppen speichert; und
einem Identifikatoranzeigemittel zum Anzeigen des in dem Identifikatorspeichermittel gespeicherten Identifikators, wobei
das Gruppenauswahlmittel (5) einen Button zum Empfangen der Auswahlanweisung verbunden mit dem von dem Identifikatoranzeigemittel angezeigten Identifikator bereitstellt und eingerichtet ist zu erfassen, wenn der Button die Auswahlanweisung empfängt, um wenigstens eine der Dateneinheitengruppen auszuwählen.

6. Vorrichtung nach Anspruch 5, bei der:
das Dateneinheitenabrufmittel (10) eingerichtet ist, den Identifikator der die abgerufene Dateneinheit enthaltenden Dateneinheitengruppe abzurufen, und die ferner ein Abrufergebnisanzeigemittel (11) zum Anzeigen des abgerufenen Identifikators der Dateneinheitengruppe grafisch verbunden mit der abgerufenen Dateneinheit umfasst.

7. Vorrichtung nach Anspruch 3, ferner mit:
einem Ortsspeichermittel (2), das den Ort der Dateneinheitengruppe in dem Dateisystem (1) speichert, um den Umfang des Abrufens des Gruppenabrufmittels (5) zu begrenzen, wobei
das Gruppenabrufmittel (5) eingerichtet ist, die Dateneinheitengruppe von dem in dem Ortsspeichermittel (2) gespeicherten Ort im Dateisystem (1) abzurufen.

8. Vorrichtung nach Anspruch 3, ferner mit:
einem Analysebedingungsspeichermittel (16), das eine Analysebedingung speichert, um die Dateneinheit zu analysieren;
einem Analysewertberechnungsmittel (15) zum Berechnen eines Analysewerts der Dateneinheit, die in der durch das Gruppenauswahlmittel ausgewählten wenigstens einen Dateneinheitengruppe enthalten ist, entsprechend der in dem Analysebedingungsspeichermittel gespeicherten Analysebedingung; und
einem Positionsberechnungsmittel (14) zum Berechnen einer Position, wo ein Bildelement, das die Existenz der Dateneinheit grafisch darstellt, angeordnet ist,
einem Analysebilderzeugungsmittel (13) zum Erzeugen eines Analysebildes, welches das Bildelement der Dateneinheit an der von dem Positionsberechnungsmittel berechneten Position enthält.

9. Vorrichtung nach Anspruch 8, ferner mit:
einem Analysebildanzeigemittel (12) zum Anzeigen des von dem Analysebilderzeugungsmittel (13) erzeugten Analysebildes.

10. Vorrichtung nach Anspruch 8, ferner mit:
einem Identifikatorspeichermittel, das einen Identifikator für jede der von dem Gruppenabrufmittel abgerufenen Dateneinheitengruppen speichert, und
einem Identifikatoranzeigemittel zum Anzeigen des in dem Identifikatorspeichermittel gespeicherten Identifikators, wobei
das Gruppenauswahlmittel (6) einen Button zum Empfangen der Auswahlanweisung verbunden mit dem von dem Identifikatoranzeigemittel angezeigten Identifikator bereitstellt und eingerichtet ist zu erfassen, wenn der Button die Auswahlanweisung empfängt, um wenigstens eine der Dateneinheitengruppen auszuwählen.

11. Vorrichtung nach Anspruch 8, ferner mit:
einem Ortsspeichermittel (2) das den Ort der Dateneinheitengruppe in dem Dateisystem (1) speichert, um den Umfang des Abrufens des Gruppenabrufmittel (5) zu begrenzen, wobei
das Gruppenabrufmittel (5) eingerichtet ist, die Dateneinheitengruppe von dem in dem Ortsspeichermittel (2) gespeicherten Ort im Dateisystem (1) abzurufen.

12. Vorrichtung nach Anspruch 3, ferner mit:
einem Identifikatorspeichermittel, das den Identifikator der von dem Gruppenabrufmittel (15) abgerufenen Dateneinheitengruppe speichert; und
einem Identifikatoranzeigemittel zum Anzeigen des in dem Identifikatorspeichermittel gespeicherten Identifikators.

13. Vorrichtung nach Anspruch 12, bei der
das Gruppenabrufmittel (5) eingerichtet ist, eine Datei abzurufen, die durch eine vorgegebene Verzeichnisstruktur definiert ist, die eine Datendatei, welche eine Dateneinheit mit einem Paar aus einem Schlagwort und einem Datenkörper speichert, eine Indexdatei, welche eine Entsprechungsbeziehung zwischen einem zum Abrufen wenigstens einer der Dateneinheiten eingegebenen Suchschlüssel und wenigstens einer der Dateneinheiten und einer Adresse der Dateneinheit in der dem Suchschlüssel entsprechenden Datendatei speichert, und eine Hash-Tabellendatei zum Umwandeln des Suchschlüssels in eine Adresse der Entsprechungsbeziehung in der Indexdatei entsprechend dem Suchschlüssel umfasst.

14. Vorrichtung nach Anspruch 3, ferner mit:
einer Mehrzahl von Dateneinheitengruppen, von denen jede einen Identifikator hat und wenigstens eine Dateneinheit enthält;
einem Identifikatoranzeigemittel zum Anzeigen der Identifikatoren der Dateneinheitengruppen, wobei:
das Gruppenauswahlmittel (6) eingerichtet ist, um eine Auswahlanweisung von einem Benutzer zu empfangen, um wenigstens zwei der Dateneinheitengruppen der Reihe nach aus den Dateneinheitengruppen auszuwählen, deren Identifikator durch das Identifikatoranzeigemittel angezeigt wird;
ein Auswahlgruppenspeichermittel (7) den Identifikator jeder durch das Gruppenauswahlmittel (6) ausgewählten Dateneinheitengruppe mit der Reihenfolge der Auswahl speichert;
das Dateneinheitenabrufmittel (10) eingerichtet ist, die Dateneinheit, die der von dem Abrufbedingungsempfangsmittel (9) empfangenen Abrufbedingung entspricht, aus einer der Dateneinheitengruppen in einer ersten Reihenfolge abzurufen, und die Dateneinheit, die der aus der Dateneinheitengruppe in der ersten Reihenfolge abgerufenen Dateneinheit entspricht, aus der Dateneinheitengruppen in einer zweiten Reihenfolge entsprechend dem Identifikator der Dateneinheit und dessen in dem Auswahlgruppenspeichermittel (7) gespeicherter Datenreihenfolge abzurufen; und
ein Abrufergebnisanzeigemittel (11) eingerichtet ist, die aus der Dateneinheitengruppe in der zweiten Reihenfolge abgerufene Dateneinheit anzuzeigen.

15. Vorrichtung nach Anspruch 3, ferner mit:
einem Beziehungsspeichermittel, welches die relationale Information speichert, die eine Mehrzahl der Dateneinheitengruppen miteinander verknüpft;
einem Beziehungsauswahlmittel zum Empfangen einer Beziehungsauswahlanweisung von einem Benutzer, um die in dem Beziehungsspeichermittel gespeicherte relationale Information auszuwählen; und
einem Beziehungserzeugungsmittel zum Erzeugen von neuer relationaler Information, die die durch das Gruppenauswahlmittel (6) ausgewählte Dateneinheitengruppe und die durch das Beziehungsauswahlmittel ausgewählte relationale Information in Beziehung setzt, wobei
das Abrufmittel eingerichtet ist, eine Dateneinheit aus den miteinander in Beziehung stehenden Dateneinheitengruppen entsprechend der durch das Beziehungserzeugungsmittel neu erzeugten relationalen Information abzurufen.

16. Vorrichtung nach Anspruch 8, ferner mit:
einem Beziehungsspeichermittet, welches die relationale Information speichert, die eine Mehrzahl der Dateneinheitengruppen miteinander verknüpft;
einem Beziehungsauswahlmittel zum Empfangen einer Beziehungsauswahlanweisung von einem Benutzer, um die in dem Beziehungsspeichermittel gespeicherte relationale Information auszuwählen; und
einem Beziehungserzeugungsmittel zum Erzeugen von neuer relationaler Information, die die durch das Gruppenauswahlmittel (6) ausgewählte Dateneinheitengruppe und die durch das Beziehungsauswahlmittel ausgewählte relationale Information in Beziehung setzt, wobei
das Analysewertberechnungsmittel (15) eingerichtet ist, den Analysewert der in den miteinander in Beziehung stehenden Dateneinheitengruppen enthaltenen Dateneinheit entsprechend der durch das Beziehungserzeugungsmittel neu erzeugten relationalen Information zu berechnen.

## Revendications

1. Procédé de traitement de groupes d'unités de données pour gérer un système de fichiers (1) qui stocke une pluralité de fichiers définis par différentes sortes de format de fichier, dans lequel au moins l'un des fichiers est un groupe d'unités de données qui est défini par un format de fichier prédéterminé et qui comprend des unités de données, le groupe d'unités de données pouvant être situé n'importe où dans le système de fichiers (1), comprenant les étapes consistant à :
extraire au moins un groupe d'unités de données, qui comprend un fichier de données, un fichier d'index et un fichier de table de hachage, le fichier de données conservant une paire d'un mot de tête et d'un corps de données, dudit système de fichiers selon le format de fichier ;
extraire une instruction de sélection d'un utilisateur pour sélectionner au moins un groupe d'unités de données dudit au moins un groupe d'unités de données extrait ;
recevoir une condition d'extraction pour extraire au moins une unité de données comportant une paire mot de tête/corps de données ; et
extraire au moins une unité de données correspondant à la condition d'extraction reçue dudit au moins un groupe d'unités de données qui est sélectionné selon l'instruction de sélection reçue.

2. Procédé selon la revendication 1, comprenant en outre les étapes consistant à :
mémoriser une condition d'analyse pour analyser l'unité de données à l'avance ;
calculer une valeur d'analyse de l'unité de données incluse dans ledit au moins un groupe d'unités de données qui est sélectionné selon l'instruction de sélection reçue, selon la condition d'analyse mémorisée ;
calculer une position où est placé un élément image qui représente de façon graphique l'existence de l'unité de données ; et
générer une image d'analyse qui comprend l'élément image de l'unité de données à la position calculée.

3. Dispositif de traitement de groupes d'unités de données, comprenant :
un système de fichiers (1) qui stocke une pluralité de fichiers définis par différentes sortes de format de fichier, dans lequel au moins l'un des fichiers est un groupe d'unités de données qui est défini par un format de fichier prédéterminé, qui comprend un fichier de données, un fichier d'index et un fichier de table de hachage, le fichier de données conservant une paire d'un mot de tête et d'un corps de données, et qui peut être situé n'importe où dans le système de fichiers (1) ;
un moyen d'extraction de groupe (5) pour extraire au moins un groupe d'unités de données dudit système de fichiers (1) selon le format de fichier ;
un moyen de sélection de groupe (6) pour recevoir une instruction de sélection d'un utilisateur pour sélectionner au moins un groupe d'unités de données dudit au moins un groupe d'unités de données extrait par ledit moyen d'extraction de groupe (5) ;
un moyen de réception (9) de condition d'extraction pour recevoir une condition d'extraction pour extraire au moins une unité de données ; et
un moyen d'extraction (10) d'unité de données pour extraire au moins une unité de données qui satisfait la condition d'extraction reçue par ledit moyen de réception (9) de condition d'extraction dudit au moins un groupe d'unité de données qui est sélectionné selon l'instruction de sélection reçue par le moyen de sélection de groupe (6).

4. Dispositif selon la revendication 3, comprenant en outre un moyen d'affichage (11) de résultat d'extraction qui affiche l'unité de données extraite par le moyen d'extraction (10) d'unité de données.

5. Dispositif selon la revendication 3, comprenant en outre :
un moyen de stockage d'identificateur qui mémorise un identificateur pour chacun des groupes d'unités de données extraits par ledit moyen d'extraction de groupe ; et
un moyen d'affichage d'identificateur pour afficher l'identificateur mémorisé dans ledit moyen de stockage d'identificateur ;
dans lequel ledit moyen de sélection de groupe (6) fournit un bouton pour recevoir l'instruction de sélection associée à l'identificateur affiché par ledit moyen d'affichage d'identificateur et est adapté pour détecter ledit bouton recevant l'instruction de sélection pour sélectionner au moins l'un des groupes d'unités de données.

6. Dispositif selon la revendication 5, dans lequel
ledit moyen d'extraction (10) d'unité de données est adapté pour extraire l'identificateur du groupe d'unité de données qui inclut l'unité de données extraite, et comprend en outre
un moyen d'affichage de résultat d'extraction (11) pour afficher l'identificateur extrait du groupe d'unités de données connecté de façon graphique à l'unité de données extraite.

7. Dispositif selon la revendication 3, comprenant en outre :
un moyen de stockage d'emplacement (2) qui mémorise l'emplacement du groupe d'unités de données dans le système de fichiers (1) pour limiter l'étendue de l'extraction du moyen d'extraction de groupe (5) ;
dans lequel ledit moyen d'extraction de groupe (5) est adapté pour extraire le groupe d'unités de données de l'emplacement dans le système de fichiers (1) mémorisé dans ledit moyen de stockage d'emplacement (2).

8. Dispositif selon la revendication 3, comprenant en outre :
un moyen de stockage de condition d'analyse (16) qui mémorise une condition d'analyse pour analyser l'unité de données ;
un moyen de calcul de valeur d'analyse (15) pour calculer une valeur d'analyse de l'unité de données incluse dans ledit au moins un groupe d'unités de données sélectionné par ledit moyen de sélection de groupe selon la condition d'analyse mémorisée dans ledit moyen de stockage de condition d'analyse ; et
un moyen de calcul de position (14) pour calculer une position où est placé un élément image qui représente graphiquement l'existence de l'unité de données ;
un moyen de génération d'image d'analyse (13) pour générer une image d'analyse qui comprend l'élément image de l'unité de données à la position calculée par ledit moyen de calcul de position.

9. Dispositif selon la revendication 8, comprenant en outre un moyen d'affichage d'image d'analyse (12) pour afficher l'image d'analyse générée par ledit moyen de génération d'image d'analyse (13).

10. Dispositif selon la revendication 8, comprenant en outre :
un moyen de stockage d'identificateur qui mémorise un identificateur pour chacun des groupes d'unités de données extraits par ledit moyen d'extraction de groupes ; et
un moyen d'affichage d'identificateur pour afficher l'identificateur mémorisé dans ledit moyen de stockage d'identificateur ;
dans lequel ledit moyen de sélection de groupe (6) fournit un bouton pour recevoir l'instruction de sélection associée à l'identificateur affiché par ledit moyen d'affichage d'identificateur et est adapté pour détecter ledit bouton recevant l'instruction de sélection pour sélectionner au moins l'un des groupes d'unités de données.

11. Dispositif selon la revendication 8, comprenant en outre :
un moyen de stockage d'emplacement (2) qui mémorise l'emplacement du groupe d'unités de données dans le système de fichiers (1) pour limiter l'étendue de l'extraction du moyen d'extraction de groupe (5) ;
dans lequel ledit moyen d'extraction de groupe (5) est adapté pour extraire le groupe d'unités de données de l'emplacement dans le système de fichiers (1) mémorisé dans ledit moyen de stockage d'emplacement (2).

12. Dispositif selon la revendication 3, comprenant en outre :
un moyen de stockage d'identificateur qui mémorise l'identificateur du groupe d'unités de données extrait par ledit moyen d'extraction de groupe (15) ; et
un moyen d'affichage d'identificateur pour afficher l'identificateur mémorisé dans ledit moyen de stockage d'identificateur.

13. Dispositif selon la revendication 12, dans lequel ledit moyen d'extraction de groupe (5) est adapté pour extraire un fichier défini par une structure de répertoire prédéterminée qui inclut un fichier de données qui mémorise une unité de données comportant une paire mot de tête/corps de données, un fichier d'index qui mémorise une relation correspondante entre une clé de recherche saisie pour extraire au moins l'une des unités de données et une adresse de l'unité de données dans le fichier de données correspondant à la clé de recherche, et un fichier de table de hachage pour convertir la clé de recherche en une adresse de la relation correspondante dans le fichier d'index correspondant à la clé de recherche.

14. Dispositif selon la revendication 3, comprenant en outre :
une pluralité de groupes d'unités de données dont chacun comporte un identificateur et comprend au moins une unité de données ;
un moyen d'affichage d'identificateur pour afficher les identificateurs des groupes d'unités de données, dans lequel :
le moyen de sélection de groupe (6) est adapté pour recevoir une instruction de sélection d'un utilisateur pour sélectionner au moins deux des groupes d'unités de données dans l'ordre des groupes d'unités de données dont l'identificateur est affiché par ledit moyen d'affichage d'identificateur ;
un moyen de stockage de groupe sélectionné (7) mémorise l'identificateur de chaque groupe d'unités de données sélectionné par ledit moyen de sélection de groupe (6) avec l'ordre de sélection ;
le moyen d'extraction (10) d'unité de données est adapté pour extraire l'unité de données qui correspond à la condition d'extraction reçue par ledit moyen de réception (9) de condition d'extraction de l'un desdits groupes d'unités de données dans un premier ordre et pour extraire l'unité de données correspondant à l'unité de données extraite du groupe d'unités de données dans le premier ordre du groupe d'unités de données dans un deuxième ordre selon l'identificateur de l'unité de données et son ordre mémorisé dans ledit moyen de stockage de groupe sélectionné (7) ; et
un moyen d'affichage de résultat d'extraction (11) est adapté pour afficher l'unité de données extraite dudit groupe d'unités de données dans le deuxième ordre.

15. Dispositif selon la revendication 3, comprenant en outre :
un moyen de stockage de relation qui mémorise l'information relationnelle qui lie une pluralité des groupes d'unités de données entre eux ;
un moyen de sélection de relation pour recevoir une instruction de sélection de relation d'un utilisateur pour sélectionner l'information relationnelle mémorisée dans ledit moyen de stockage de relation ; et
un moyen de création de relation pour créer une nouvelle information relationnelle qui concerne à la fois le groupe d'unités de données sélectionné par ledit moyen de sélection de groupe (6) et l'information relationnelle sélectionnée par ledit moyen de sélection de relation ;
dans lequel ledit moyen d'extraction est adapté pour extraire une unité de données des groupes d'unités de données liés entre eux selon l'information relationnelle nouvellement créée par ledit moyen de création de relation.

16. Dispositif selon la revendication 8, comprenant en outre :
un moyen de stockage de relation qui mémorise l'information relationnelle qui lie une pluralité des groupes d'unités de données entre eux ;
un moyen de sélection de relation pour recevoir une instruction de sélection de relation d'un utilisateur pour sélectionner l'information relationnelle mémorisée dans ledit moyen de stockage de relation ; et
un moyen de création de relation pour créer une nouvelle information relationnelle qui concerne à la fois le groupe d'unités de données sélectionné par ledit moyen de sélection de groupe (6) et l'information relationnelle sélectionnée par ledit moyen de sélection de relation ;
dans lequel ledit moyen de calcul de valeur d'analyse (15) est adapté pour calculer la valeur d'analyse de l'unité de données incluse dans les groupes d'unités de données liés entre eux selon l'information relationnelle nouvellement créée par ledit moyen de création de relation.
